# EUROPEAN PATENT APPLICATION

(11) **EP 4 701 340 A1**
(43) Date of publication of application: **25.02.2026**
(21) Application number: 24868769.1
(22) Date of filing: 14.08.2024
(51) Int. Cl.: H05B 6/12, H05B 6/06, F24C 15/34, F24C 15/10, F24C 3/12, H02M 1/10

(54) **COOKING APPARATUS**

(30) Priority: 21.09.2023 KR 20230126657; 21.09.2023 KR 20230126658; 26.09.2023 KR 20230129155; 22.02.2024 KR 20240026117
(71) Applicant: LG Electronics Inc., Yeongdeungpo-gu Seoul 07336 (KR)
(72) Inventor: MOON, Hyunwook, Seoul 08592 (KR); KIM, Eui Sung, Seoul 08592 (KR); PARK, Kyungho, Seoul 08592 (KR)
(74) Representative: Ter Meer Steinmeister & Partner
(86) International application number: PCT/KR2024/096007
(87) International publication number: WO 2025/063794

(57) **Abstract**

The present invention relates to a cooking apparatus in which the heating efficiency and power efficiency of a heating coil can be improved by arranging an external insulating material outside an insulating material accommodating the heating coil and arranging a reflector, which reflects radiant heat generated in the heating coil toward a top plate, in an internal accommodation space of the insulating material.

## Description

### [Technical Field]

The present disclosure relates to a cooking appliance, and more specifically, to a cooking appliance in which a temperature sensor is mounted on a coil circuit board module in which a working coil pattern is formed, thereby preventing deterioration of space utilization due to addition of the temperature sensor, and the temperature sensor is integrally formed with the coil circuit board module, thereby minimizing a manufacturing cost and manufacturing time.

### [Background Art]

A cooking appliance is one of home appliances for cooking food, and is installed in a kitchen space to cook food according to a user's intention. Such cooking appliances may be classified in various ways based on a used heat source, a form, and a type of used fuel.

When the cooking appliances are classified based on the type of cooking food, the cooking appliances may be classified into an open type cooking appliance and a closed type cooking appliance based on a form of a space in which the food is placed. The closed type cooking appliance may include an oven and a microwave, and the open type cooking appliance may include a cooktop and a hop.

The cooktop as the open type cooking appliance may be configured to heat a cooking target contained in a cooking container using at least one burner.

The cooktop may be provided in a form of having a burner that uses electricity, or may be provided in a form of having a burner that uses gas.

In addition, the cooktop may be implemented alone. The cooking appliance may be implemented in a form of an oven range including an oven under the cooktop.

An example of the cooktop having the burner using electricity is an induction heating cooking appliance.

The induction heating cooking appliance is a cooking appliance that performs a cooking function in an induction heating manner. In the induction heating cooking appliance, when high-frequency power is applied to a working coil, a magnetic field may be generated around the working coil.

An eddy current is generated in the cooking container made of a magnetic material under the generated magnetic field, and the food cooking may be performed by the cooking container which acts as a resistor against the eddy current and generates heat.

Such an induction heating cooking appliance does not require combustion of gas and thus does not generate combustion exhaust gas. In addition, the induction heating cooking appliance immediately generates heat in the container itself, thereby minimizing a transfer process via radiation or conduction of heat and thus heating the food at a high speed.

In a conventional induction heating type cooktop, a working coil is formed by twisting a plurality of Litz wires, and an individual burner is formed by winding the working coil in a spiral shape multiple times so as to have a multi-multi-layer structure.

In this regard, a coil frame for maintaining and supporting a winding shape of the working coil should be necessarily provided in each burner.

Therefore, a vertical size of the individual burner as a sum of a vertical size of the working coil wound in the multi-layer structure and a vertical size of the coil frame amounts to a significantly greater percentage of an entire vertical size of the cooktop.

Due to the limitation of the size of the individual burner constituting the cooktop, the conventional cooktop has no choice but to have a limitation in increasing an output of the individual burner.

In addition, in configuring the cooktop having a plurality of burners, a space in which other components or parts are installed in the conventional cooktop is very limited, and accordingly, a total number of burners capable of being provided in the cooktop is very limited.

In an alternative to the Ritz wire-type working coil, a technology related to a cooktop in which a burner is formed by forming the working coil in a spiral multilayer pattern on a printed circuit board has been developed. (Prior Document 001, Design and Optimization of Small Inductors on Extra-Thin PCB for Flexible Cooking Surfaces/IEEE TRANSACTIONS ON INDUSTRY APPLICATIONS, VOL. 53, NO. 1, JANUARY/FEBRUARY 2017)

The cooktop disclosed in the prior document 001 may be configured such that the burner is formed by forming a working coil pattern wound in a spiral shape in a single layer or a plurality of layers on a single printed circuit board.

The cooktop disclosed in the prior art document 001 as described above may have an advantage in that the working coil patterns constituting the burner are integrally formed with each other on a single printed circuit board such that a vertical size of the cooktop may be significantly reduced compared to a conventional cooktop, thereby improving the vertical space utilization, and the number of burners may be significantly increased compared to the conventional cooktop, thereby improving the horizontal space utilization.

### [Disclosure]

### [Technical Problem]

The cooktop disclosed in the prior art document 001 has a problem in that a temperature sensor for sensing a temperature of the container or a temperature of a top plate on which the container is seated is not disposed on the printed circuit board in which the working coil pattern is formed, and thus the temperature of the container or the top plate cannot be effectively sensed.

In addition, the cooktop disclosed in the prior art document 001 has a problem in that the temperature sensor is disposed at a position other than the printed circuit board in which the working coil pattern is formed, such that a space in which the temperature sensor is to be installed is additionally secured between the printed circuit board and the top plate.

In addition, the cooktop disclosed in the prior art document 001 has a problem in that when the temperature sensor is separately installed, an additional structure for fixing the temperature sensor and an additional wiring for electrically connecting the temperature sensor to a control board circuit should be secured.

In addition, the cooktop disclosed in prior document 001 has a problem in that when the temperature sensor is separately installed, a process for placing the temperature sensor on the cooktop should be added, such that a manufacturing cost and manufacturing time may be increased.

The present disclosure has been devised to solve the problems of the prior art. Thus, a first purpose of the present disclosure is to provide a cooking appliance in which a temperature sensor is mounted on a coil circuit board module in which a working coil pattern is formed, thereby preventing deterioration of space utilization due to the addition of the temperature sensor, and the temperature sensor is integrally formed with the coil circuit board module, thereby minimizing a manufacturing cost and manufacturing time.

In addition, a second purpose of the present disclosure is to provide a cooking appliance in which a temperature sensor is disposed in a central inner area which is positioned inwardly of the sensing coil pattern for sensing whether a container is seated and in which the sensing coil pattern is not formed, thereby utilizing the central inner area which may be a meaningless dummy area as an installation space of the temperature sensor, thereby improving utilization of a board area of the coil circuit board module.

In addition, a third purpose of the present disclosure is to provide a cooking appliance in which a pair of electrodes of the temperature sensor are arranged so as to be spaced apart from each other in a direction parallel to or intersecting an extension direction of the working coil pattern, and a pair of sensor pads connected to the pair of electrodes and provided in the coil circuit board module are arranged so as to be spaced apart from each other in the direction parallel to or intersecting the extension direction thereof, thereby effectively preventing a lead pattern for transmitting an output signal generated from the temperature sensor from interfering with the working coil pattern.

In addition, a fourth purpose of the present disclosure is to provide a cooking appliance in which a temperature sensor is mounted on a coil circuit board module in a state in which a sensor body of the temperature sensor is isolated from the coil circuit board module, thereby minimizing the conduction of heat generated from the working coil pattern to the temperature sensor, thereby improving the accuracy of temperature detection of the container or the top plate.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### [Technical Solution]

The cooking appliance according to the present disclosure comprises: a top plate on which a container is seated; a temperature sensor configured to sense a temperature of the top plate; and a coil circuit board module including: a working coil pattern spirally wound to generate a magnetic field; and a sensing coil pattern spirally wound to sense whether the container is seated on the top plate, wherein the temperature sensor may be disposed in the coil circuit board module in a state in which the temperature sensor may be surrounded with the sensing coil pattern when being viewed from the top plate.

Moreover, the temperature sensor may be positioned so as to non-overlap the sensing coil pattern and the working coil pattern.

Moreover, the sensing coil pattern may have a central inner area in which no pattern is formed, wherein the temperature sensor may be positioned in the central inner area.

Moreover, the temperature sensor may include: a sensing chip outputting an output signal related to a sensed temperature; a sensor body accommodating the sensing chip therein; and a first electrode and a second electrode arranged so as to be spaced apart from each other while the sensor body may be interposed therebetween, wherein the first electrode and the second electrode are electrically connected to the sensing chip, wherein the coil circuit board module may have a rectangular plate shape, wherein a direction in which the first electrode and the second electrode are arranged so as to be spaced apart from each other may be parallel to or intersect an extension direction of an outer edge of the coil circuit board module.

Moreover, the coil circuit board module may include a pair of sensor pads electrically connected to the first electrode and the second electrode, respectively, wherein the pair of sensor pads are arranged to be spaced apart from each other while the sensor body may be interposed therebetween, wherein a direction in which the pair of sensor pads are arranged so as to be spaced apart from each other may be parallel to or intersect an extending direction of an outer edge of the coil circuit board module.

Moreover, the temperature sensor may include: a sensing chip outputting an output signal related to a sensed temperature; a sensor body accommodating the sensing chip therein; and a first electrode and a second electrode arranged so as to be spaced apart from each other while the sensor body may be interposed therebetween, wherein the first electrode and the second electrode are electrically connected to the sensing chip, wherein the temperature sensor may be mounted on the coil circuit board module in a state in which the sensor body may be isolated from the coil circuit board module.

Moreover, a concave groove may be defined in an upper surface of the coil circuit board module and may be disposed under the sensor body and may be depressed in a direction away from the sensor body, wherein the concave groove may at least partially isolate the sensor body from the coil circuit board module.

Moreover, a longitudinal width of the sensor body may be smaller than a longitudinal width of the concave groove, wherein a transverse width of the sensor body may be smaller than a transverse width of the concave groove.

Moreover, a depth in a vertical direction of the concave groove may be smaller than or equal to half of a thickness in the vertical direction of the coil circuit board module.

Moreover, the coil circuit board module may include a pair of sensor pads electrically connected to the first electrode and the second electrode, respectively, wherein the pair of sensor pads are arranged so as to be spaced apart from each other while the sensor body may be interposed therebetween, wherein the pair of sensor pads may be disposed in the coil circuit board module such that a predetermined longitudinal spacing may be defined between the concave groove and each of the pair of sensor pads.

Moreover, the coil circuit board module may further include a through-hole extending from a lower end surface of the concave groove through the coil circuit board module to a lower end surface of the coil circuit board module, wherein a horizontal cross-sectional area size of the through-hole may be smaller than a horizontal cross-sectional area size of the concave groove.

Moreover, the coil circuit board module may have a through-hole disposed under the sensor body and extending through an upper surface to a lower surface of the coil circuit board module, wherein the through-hole may entirely isolate the sensor body from the coil circuit board module.

Moreover, a longitudinal width of the sensor body may be smaller than a longitudinal width of the through-hole, wherein a transverse width of the sensor body may be smaller than a transverse width of the through-hole.

Moreover, a thermal insulating material may be disposed in an upper end surface of the coil circuit board module and may entirely isolate the sensor body from the upper end surface of the coil circuit board module.

Moreover, the first electrode and the second electrode may have respective protrusions arranged in a parallel manner with an upper end surface of the coil circuit board module, wherein when the temperature sensor is mounted on the upper end surface of the coil circuit board module, the sensor body may be isolated from the upper end surface of the coil circuit board module by the protrusion.

Moreover, an isolation spacing may be defined between the sensor body and the upper end surface of the coil circuit board module, wherein a vertical height of the isolation spacing may be greater than or equal to a vertical thickness of the protrusion.

Moreover, each of the protrusion of the first electrode and the protrusion of the second electrode may extend in a direction away from the sensor body.

Moreover, each of the protrusion of the first electrode and the protrusion of the second electrode may extend in a direction toward the sensor body.

Moreover, the temperature sensor may include: a sensing chip outputting an output signal related to a sensed temperature; a sensor body accommodating the sensing chip therein; and a first electrode and a second electrode arranged so as to be spaced apart from each other while the sensor body may be interposed therebetween, wherein the first electrode and the second electrode are electrically connected to the sensing chip, wherein the coil circuit board module may have a through-slit defined therein at a position not overlapping the sensor body, the first electrode, and the second electrode in a vertical direction, wherein the through-slit may extend through an upper end surface to a lower end surface of the coil circuit board module.

Moreover, the through-slit may include a pair of the through-slits, wherein the pair of through-slits may be disposed in the coil circuit board module so as to be spaced apart from each other while the sensor body is interposed therebetween.

### [Advantageous Effects]

According to the present disclosure, the temperature sensor is mounted on the coil circuit board module in which the working coil pattern is formed, thereby preventing deterioration of space utilization due to the addition of the temperature sensor, and the temperature sensor is integrally formed with the coil circuit board module, thereby minimizing a manufacturing cost and manufacturing time.

In addition, according to the present disclosure, the temperature sensor is disposed in a central inner area which is positioned inwardly of the sensing coil pattern for sensing whether a container is seated and in which the sensing coil pattern is not formed, thereby utilizing the central inner area which may be a meaningless dummy area as an installation space of the temperature sensor, thereby improving utilization of a board area of the coil circuit board module.

In addition, according to the present disclosure, a pair of electrodes of the temperature sensor are arranged so as to be spaced apart from each other in a direction parallel to or intersecting an extension direction of the working coil pattern, and a pair of sensor pads connected to the pair of electrodes and provided in the coil circuit board module are arranged so as to be spaced apart from each other in the direction parallel to or intersecting the extension direction thereof, thereby effectively preventing a lead pattern for transmitting an output signal generated from the temperature sensor from interfering with the working coil pattern.

In addition, according to the present disclosure, the temperature sensor is mounted on the coil circuit board module in a state in which the sensor body of the temperature sensor is isolated from the coil circuit board module, thereby minimizing the conduction of heat generated from the working coil pattern to the temperature sensor, thereby improving the accuracy of temperature detection of the container or the top plate.

In addition to the above-described effects, specific effects of the present disclosure will be described together while describing specific matters for implementing the present disclosure.

### [Description of Drawings]

FIG. 1 is a front perspective view of a cooking appliance according to an embodiment of the present disclosure.
FIG. 2 is a plan view of the cooking appliance shown in FIG. 1 and illustrates a state in which a display line is turned on.
FIG. 3 is a perspective view of the cooking appliance shown in FIG. 1.
FIG. 4 is an exploded perspective view of a cooktop of the cooking appliance shown in FIG. 1.
FIG. 5 is a partially enlarged view of FIG. 4.
FIG. 6 is a plan view of the cooktop illustrated in FIG. 4, and is a see-thorough view of a structure under a top plate.
FIG. 7 is a schematic cross-sectional view for illustrating a multi-layer structure of a first coil circuit board module as shown in FIG. 4.
FIG. 8 is a plan view of a first layer constituting a multi-layer structure of the first coil circuit board module shown in FIG. 4, and FIG. 9 is a partially enlarged view of FIG. 8.
FIG. 10 is a plan view of a second layer constituting a multi-layer structure of the first coil circuit board module as shown in FIG. 4.
FIG. 11 is a partially enlarged view of FIG. 8 and illustrates patterns formed in each of first to twelfth layers.
FIG. 12 is a plan view of each of third to seventh layers constituting a multi-layer structure of the first coil circuit board module as shown in FIG. 4.
FIG. 13 is a plan view of each of eighth to twelfth layers constituting a multi-layer structure of the first coil circuit board module as shown in FIG. 4.
(a) in FIG. 14 is a plan view illustrating a portion of a first type pattern illustrated in FIG. 12, and (b) in FIG. 14 is a plan view illustrating a portion of a second type pattern illustrated in FIG. 13.
(a) in FIG. 15 is a partially enlarged view of (a) in FIG. 14, and (b) in FIG. 15 is a partially enlarged view of (b) in FIG. 14.
FIG. 16 is a schematic cross-sectional view illustrating a structure in which the first type patterns respectively constituting the third to seventh layers and the second type patterns respectively constituting the eighth to twelfth layers as illustrated in FIG. 4 are collectively connected to each other via a working coil via hole.
(a) in FIG. 17 is a partially enlarged view of (a) in FIG. 14, and (b) in FIG. 17 is a partially enlarged view of (b) in FIG. 14, which are partially enlarged views for illustrating a common terminal of a first type pattern and a common terminal of a second type pattern, respectively.
FIG. 18 is a schematic cross-sectional view illustrating a state in which a temperature sensor is mounted on a first coil circuit board module in a state in which a sensor body of the temperature sensor is in contact with an upper end surface of the first coil circuit board module.
FIG. 19 is a time-temperature graph for illustrating a temperature change trend measured in a state in which a sensor body of a temperature sensor is in contact with an upper end surface of a first coil circuit board module.
FIG. 20 is a schematic cross-sectional view illustrating a state in which a temperature sensor is mounted on a first coil circuit board module in a state in which a sensor body of the temperature sensor is isolated from an upper end surface of the first coil circuit board module by a concave groove formed in the upper end surface of the first coil circuit board module according to a first embodiment of the present disclosure.
FIG. 21 is a time-temperature graph for illustrating a temperature change trend measured in a state in which a sensor body of a temperature sensor is isolated from the upper surface of the first coil circuit board module.
FIG. 22 is a schematic cross-sectional view for illustrating a configuration in which a through-hole is added to the concave groove formed in the upper surface of the first coil circuit board module according to a second embodiment of the present disclosure.
FIG. 23 is a schematic cross-sectional view for illustrating a state in which a temperature sensor is mounted on a first coil circuit board module in a state in which a sensor body of the temperature sensor is isolated from the upper end surface of the first coil circuit board module by a through-hole formed in the upper end surface of the first coil circuit board module according to a third embodiment of the present disclosure.
FIG. 24 is a schematic cross-sectional view illustrating a state in which a temperature sensor is mounted on a first coil circuit board module in a state in which a sensor body of the temperature sensor is isolated from the upper end surface of the first coil circuit board module by an additional thermal insulator disposed on the upper end surface of the first coil circuit board module according to a fourth embodiment of the present disclosure.
FIGS. 25 and 26 are schematic cross-sectional views illustrating a state in which a temperature sensor is mounted on a first coil circuit board module in a state in which a sensor body of the temperature sensor is isolated from the upper end surface of the first coil circuit board module by respective protrusions of a pair of electrodes provided in the temperature sensor according to a fifth embodiment of the present disclosure.
FIGS. 27 and 28 are schematic cross-sectional views and plan views for illustrating a state in which through-slits are defined in a first coil circuit board module according to a sixth embodiment of the present disclosure.

### [Best Mode]

The above-mentioned purposes, features, and advantages will be described in detail later with reference to the attached drawings, so that those skilled in the art in the technical field to which the present disclosure belongs may easily implement the technical ideas of the present disclosure. In describing the present disclosure, upon determination that a detailed description of the publicly known technology related to the present disclosure may unnecessarily obscure the gist of the present disclosure, the detailed description will be omitted. Hereinafter, a preferred embodiment according to the present disclosure will be described in detail with reference to the attached drawings. In the drawings, identical reference numerals are used to indicate identical or similar components.

Although first, second, and the like are used to describe various components, these components are not limited by such terms. Such terms are only used to distinguish one component from another component, and unless specifically stated to the contrary, a first component may also be a second component.

Throughout the present document, unless otherwise stated, each component may be singular or plural.

Hereinafter, a first component being disposed "on top of (or under)" a second component may mean that the first component may be disposed in contact with a top surface (or a bottom surface) of the second component, as well as a third component may be interposed between the second component and the first component disposed "on top of (or under)" the second component.

Furthermore, when a first component is described as being "connected" or "coupled" to a second component, the components may be directly connected or coupled to each other, but a third component may be "interposed" between the components or the components may be "connected" or "coupled" to each other via the third components.

As used herein, the singular constitutes "a" and "an" are intended to include the plural constitutes as well, unless the context clearly indicates otherwise. In this application, terms such as "composed of" or "include" should not be construed as necessarily including all of various components or operations described herein, but should be construed that some components or operations among those may not be included or additional components or operations may be further included.

As used herein, the singular constitutes "a" and "an" are intended to include the plural constitutes as well, unless the context clearly indicates otherwise. In this application, terms such as "composed of" or "include" should not be construed as necessarily including all of various components or operations described herein, but should be construed that some components or operations among those may not be included or additional components or operations may be further included.

Throughout the present document, "A and/or B" means A, B, or A and B, unless otherwise specified, and "C to D" means equal to or greater than C and equal to or smaller than D unless otherwise specified.

### [Overall structure of cooking appliance]

Hereinafter, an overall structure of a cooking appliance 1 according to an embodiment of the present disclosure will be described in detail with reference to the accompanying drawings.

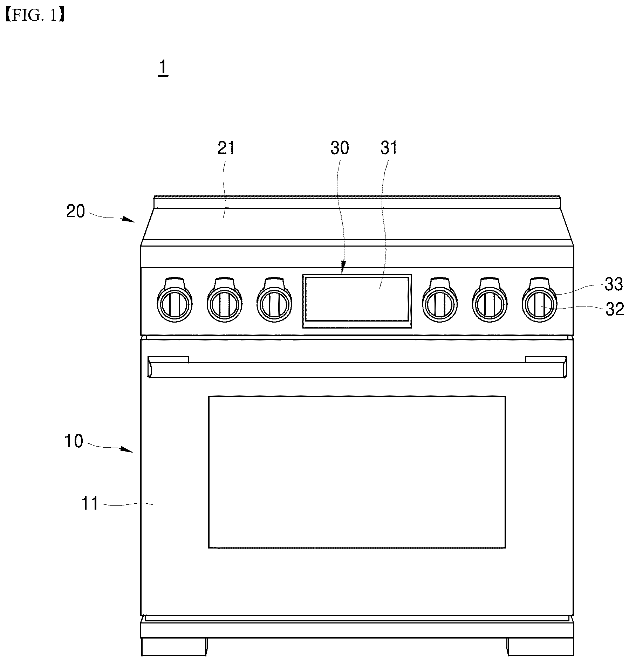

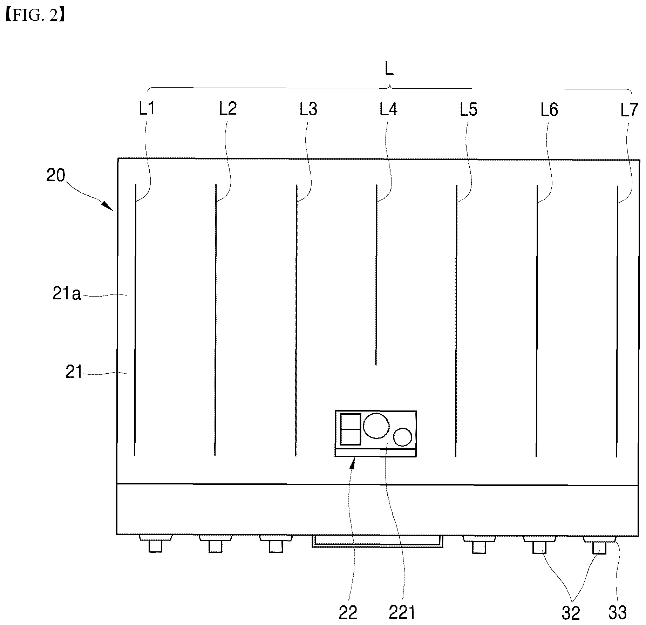

FIG. 1 is a perspective view illustrating the cooking appliance 1 according to an embodiment of the present disclosure, and FIG. 2 is a top view illustrating a cooktop 20 constituting the cooking appliance 1 illustrated in FIG. 1.

Referring to FIGS. 1 to 3, the cooking appliance 1 according to an embodiment of the present disclosure may include the cooktop 20 and an oven 10 disposed under the cooktop 20.

The cooking appliance 1 according to an embodiment of the present disclosure may be of an oven range type in which the cooktop 20 is disposed at an upper area and the oven 10 is disposed at a lower area. However, the present disclosure is not limited thereto, and the cooking appliance 1 according to an embodiment of the present disclosure may be embodied as the cooking appliance 1 including only the cooktop 20. Hereinafter, a case in which the cooking appliance 1 is embodied as being of the oven range type will be described by way of example.

The cooking appliance 1 according to an embodiment of the present disclosure is of the oven range type, thereby providing both a function of an oven as a closed cooking means, and a function of a cooktop as an open cooking means.

A cooking chamber may be formed inside the oven 10 serving as the closed cooking means. While the inside of the cooking chamber of the oven 10 is heated, food received therein may be cooked.

To this end, although not shown, the oven 10 may be provided with a heater for heating the inside of the cooking chamber. The heater may be a heating device using gas fuel or electricity.

A door 11 for selectively opening and closing the cooking chamber may be pivotably provided at the oven 10 of the cooking appliance 1.

For example, the door 11 may be provided in the oven 10 in a form of opening and closing the cooking chamber in a pull-down manner in which an upper end thereof rotates along a vertical direction around a lower end thereof.

A control panel 30 for operating the oven 10 and the cooktop 20 may be disposed on a top portion of a front surface of the cooking appliance 1.

Since the control panel 30 is disposed on the front surface of the cooking appliance 1, the control panel 30 may constitute a portion of an exterior of the front surface of the cooking appliance 1.

The control panel 30 may be provided with a plurality of switches for controlling the operation of the cooking appliance 1 and a display 31 for displaying an operation state of the cooking appliance 1.

In addition, as illustrated, the control panel 30 of the cooking appliance 1 may further include a plurality of knobs 32. That is, the plurality of knobs 32 for adjusting the operation of the cooking appliance 1 together with the display 31 may be included in the control panel 30 disposed on the top portion of the front surface of the cooking appliance 1.

Each knob 32 may be provided so as to be rotatable. The knob 32 may be provided to be able to control one of the oven 10 and the cooktop 20, or may be provided to be able to control both the oven 10 and the cooktop 20.

Via the manipulation of the knob provided as described above, one of a plurality of preset cooking modes may be selected, or a heating temperature or a heating step may be selected.

In addition, the control panel 30 of the cooking appliance 1 according to the present embodiment may further include a knob ring 33. The knob ring 33 may be disposed radially outwardly of the knob 32. For example, the knob ring 33 may be provided in a ring shape surrounding the knob 32 while being positioned in the radial direction outwardly thereof.

The knob ring 33 may serve to support the knob 32, and may serve to improve appearance quality of the cooking appliance 1 by finishing a surrounding appearance of the knob 32.

In addition, the knob ring 33 of the present embodiment may act as a timer setting switch and perform a role of displaying a timer time and an intensity of firepower together.

The knob ring 33 is installed to be rotatable independently of the knob 32, and a timer time may be set via a rotation of the knob ring 33 installed as described above.

As described above, the cooktop 20 may be disposed on top of the oven 10.

The cooktop 20 may perform a function of heating food or a container containing food which may be seated on an upper surface of the cooktop 20.

To this end, the cooktop 20 may include a top plate 21 which constitutes the upper surface of the cooktop 20 and on which the container containing food is seated.

In addition, a heater for heating the container containing food may be provided inside the cooktop 20 and under the top plate 21.

The heater may be configured to include at least one burner. For example, the burner constituting the heater may be provided in a form including a working coil for converting an electrical force supplied thereto into a magnetic force or a heating coil for converting the electrical force supplied thereto into thermal energy.

The cooktop 20 of the cooking appliance 1 according to an embodiment of the present disclosure may operate in an induction heating manner.

To this end, the burner of the cooktop 20 may be configured to include the working coil. The burner including the working coil may operate under a high-frequency current generated and supplied thereto by an inverter to generate a strong magnetic field.

The magnetic field generated in the burner including the working coil may generate an eddy current in the container including a metal component. As the eddy current flows through the container, the heat may be generated to heat the container. As the container is heated, the food contained in the container may be heated.

However, the working coil applied to the conventional induction heating type cooktop is generally formed by twisting a plurality of electrically conductive wires to form a cable, and winding the cable in a spiral shape.

However, as will be described later, a working coil constituting the cooktop 20 of the cooking appliance 1 according to an embodiment of the present disclosure may be composed of a plurality of patterns stacked on a printed circuit board, each pattern being formed in a spiral shape.

As described above, the working coil of the cooking appliance 1 according to the present disclosure may have a structure in which the pattern is stacked on the printed circuit board and thus may be referred to as a working coil pattern.

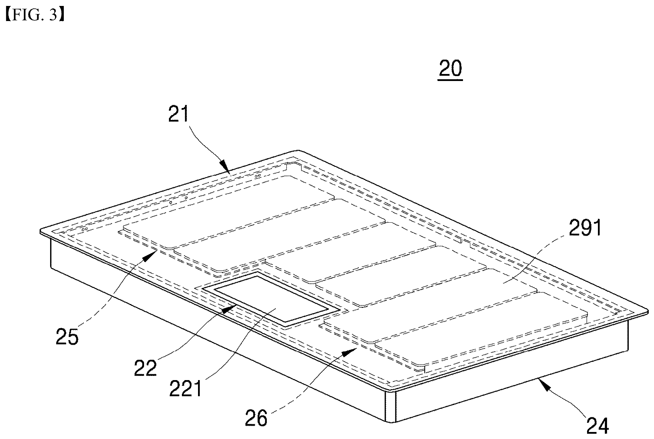

A detailed configuration of the heater including the working coil pattern will be described later with reference to FIG. 3.

### [Overall configuration of cooktop]

Hereinafter, a configuration of the cooktop 20 constituting the cooking appliance 1 according to an embodiment of the present disclosure will be described with reference to FIGS. 3 to 5.

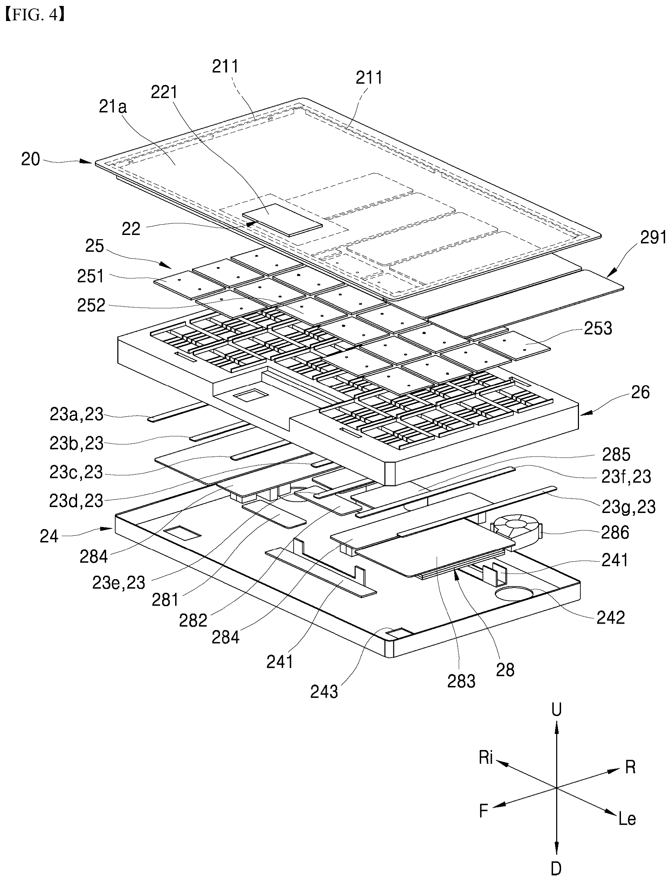

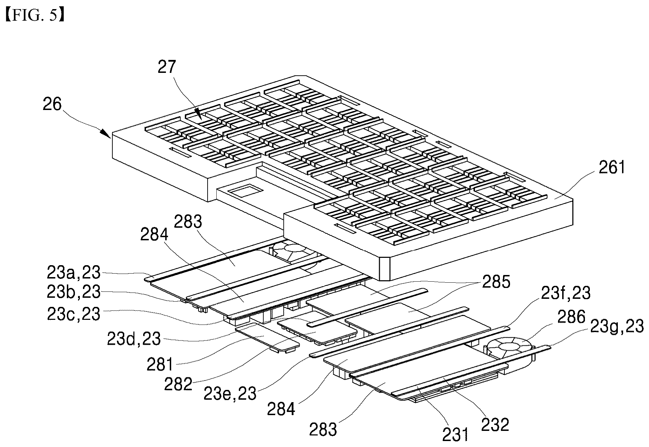

FIG. 3 is a top view of the cooktop 20 in a state in which a display line L is turned on, FIG. 4 is an exploded perspective view of the cooktop 20 illustrated in FIG. 3, and FIG. 5 is a perspective view of an inside of the cooktop 20 illustrated in FIG. 3.

First, referring to FIGS. 3 to 4, in a similar manner to the oven 10 described above, the cooktop 20 according to the present embodiment may include a control panel 22.

As illustrated, the control panel 22 of the cooktop 20 may be disposed on the top plate 21, and may be disposed at a position closer to a front edge thereof for user convenience.

The control panel 22 may be provided with various switches for controlling the operation of the cooktop 20 and a display panel 221 for displaying the operation state of the cooktop 20.

As will be described later, when it is detected that the container is seated on an upper surface 21a of the top plate 21 using a sensing coil pattern 2514, an icon corresponding to the container may be displayed on the display panel 221 of the control panel 22 disposed on the cooktop 20. By way of example, the icon may be provided in a size and a shape corresponding to a size and a shape of the container, and may be disposed at a position of the display panel 221 corresponding to a position of the cooking appliance 1.

The user may press the displayed icon to select a container as indicated by the icon, and may perform a manipulation for controlling the operation of the cooking appliance 1 related to the selected container.

For example, the user may press the icon to select the container to be manipulated, and then select a desired heating temperature of the selected container.

When the heating of the container is started via the manipulation of the control panel 22 as described above, the start of the heating of the container may be displayed on the top plate 21 using the display line L as shown in FIG. 3.

As illustrated in FIG. 3, a plurality of display lines L may be disposed on the top plate 21 of the cooktop 20.

The display line L displays information related to a position of the container, a heated state of the container, a temperature, etc. on the top plate 21 in a form of a light emission area, and thus may visually transmit the information to the user.

FIG. 3 shows an embodiment in which a total of seven display lines L are provided. These display lines L may be referred to as first to seventh display lines L1, L2, L3, L4, L5, L6, and L7 in an order starting from a left side of the top plate 21 in terms of convenience. The present disclosure is not limited thereto. However, for convenience, an example in which a total of seven display lines L are provided will be described

As illustrated, each of the display lines L may be a light emitting area in which a width in a left-right direction is much smaller than a length in a front-rear direction.

The display line L may be implemented using a light source module 23 disposed under the top plate 21 and disposed on a board supporter 26 to be described later so that each display line L may be formed in a form of the light emission area.

The light source module 23 may include a plurality of light source elements 231 for generating visible light, and a light source circuit board 232 on which the plurality of light source elements 231 are mounted.

The plurality of light source elements 231 may be disposed to irradiate visible light toward a lower surface of the top plate 21, and the incident visible light may travel through a light-transmission hole extending through the board supporter 26, a light-transmission slit hole H_sl formed in each of coil circuit board modules constituting a heater 25, and a clearance formed between adjacent coil circuit board modules, as will be described later and then be irradiated to a lower surface of the top plate 21.

The light source module 23 may be configured to include the plurality of light source elements 231 receiving power to generate visible light, and the light source circuit board 232 on which the plurality of light source elements 231 are mounted.

The light source element 231 may be applied without limitation as long as it is a means capable of receiving power and generating predetermined visible light, and may be, for example, an LED element. However, hereinafter, the present disclosure will be described based on an embodiment in which an LED element is applied as the light source element 231. The present disclosure is not limited thereto.

As illustrated, each light source circuit board 232 may linearly extend in the front-rear direction in a corresponding manner to each display line L extending linearly, and the plurality of light source elements 231 may be disposed on each light source circuit board 232 and be linearly arranged so as to be spaced apart from each other by an equal spacing or non-uniform spacings in the front-rear direction.

In addition, as described above, each of the plurality of light source modules 23 may be provided to independently irradiate visible light to each of the first to seventh display lines L1, L2, L3, L4, L5, L6, and L7. The plurality of light source modules 23 may be referred to as first to seventh light source modules 23a, 23b, 23c, 23d, 23e, 23f, and 23g in an order starting from the left side of the top plate 21.

The first to seventh light source modules 23a, 23b, 23c, 23d, 23e, 23f, and 23g may be arranged so as to be spaced apart from each other in the left-right direction in a corresponding manner to the first to seventh display lines L1, L2, L3, L4, L5, L6, and L7.

As will be described later, the spacing between the adjacent display lines L and the spacing between the adjacent light source modules 23 may be equal to or slightly greater than a width in the left-right direction of the working coil pattern 2512 constituting the heater 25.

As illustrated, the cooktop 20 of the cooking appliance 1 according to an embodiment of the present disclosure may include a bottom casing 24 constituting a front surface, a rear surface, a front surface, both opposing side surfaces, and a lower surface of the exterior of the cooktop 20.

The bottom casing 24 may be formed in a form in which an upper surface thereof is entirely opened, and the top plate 21 described above may be coupled to the opened upper surface thereof.

As shown in FIG. 3, a fastening bracket 211 for coupling to the bottom casing 24 to the top plate may be disposed on the lower surface of the top plate 21 at a position corresponding to a position of an upper end of the bottom casing 24.

As the top plate 21 is coupled to the upper end of the bottom casing 24, an inner space may be defined so as to be surrounded with the top plate 21 and the bottom casing 24 and may accommodate therein a plurality of internal components constituting the cooktop 20.

In addition, a plurality of mount brackets 241 may be provided integrally with or separately from the bottom casing 24.

The mount bracket 241 may be disposed in the inner space of the cooktop 20, and may protrude upwardly from the lower surface of the mount bracket 241 toward the electronic/electrical components.

The mount bracket 241 may support several electronic/electrical components 28 constituting the cooktop 20 while being disposed thereunder, thereby preventing the occurrence of sagging of components such as a main circuit board 281, a SMPS circuit board 282, an inverter circuit board 283, a resonance circuit board 284, an EMI filter 285, etc., and supporting these components.

In addition, as illustrated in FIG. 4, an air intake hole 242 and an air exhaust hole 243 through which air for cooling the various electronic/electrical components constituting the cooktop 20 flows may be formed to extend through a lower surface 24a of the bottom casing 24 in the vertical direction.

The cooktop 20 of the cooking appliance 1 according to an embodiment of the present disclosure may further include the heater 25 including a working coil for heating a container in an induction heating manner, and as described above, the working coil may include a plurality of working coil patterns 2512 stacked on the printed circuit board, each pattern being formed in a spiral manner.

In consideration of the fact that the plurality of working coil patterns 2512 are stacked in a plurality of multi-layer structures to form a burner, the printed circuit board formed by stacking the working coil patterns 2512 may be referred to as a coil circuit board module.

A plurality of coil circuit board modules constituting the heater 25 may be provided in consideration of manufacturing convenience and efficiency.

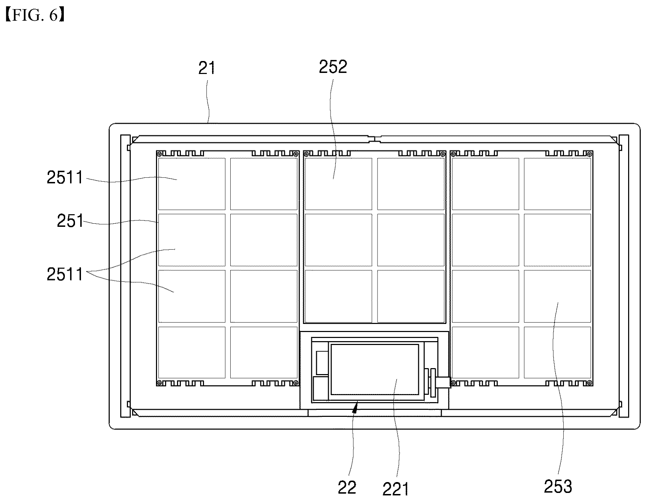

FIGS. 4 and 6 illustrate an embodiment of the cooktop 20 including the heater 25 including a total of three coil circuit board modules. However, the present disclosure will be described below on the basis of an embodiment in which the three coil circuit board modules are provided as illustrated in the drawing. The present disclosure is not limited thereto.

The three coil circuit board modules 251, 252, and 253 are referred to as a first coil circuit board module 251, a second coil circuit board module 252, and a third coil circuit board module 253 in an order starting from the left side.

Each of the coil circuit board modules 251, 252, and 253 may include a plurality of burners 2511 for heating the container.

FIG. 6 illustrates an embodiment in which eight burners 2511 may be provided in each of the first coil circuit board module 251 and the third coil circuit board module 253, and six burners 2511 may be provided in the second coil circuit board module 252. As will be described later, the number of burners 2511 may be set to vary depending on the size and output of the cooktop 20. Hereinafter, the present disclosure will be described based on an example in which each of the first coil circuit board modules 251 and the third coil circuit board modules 253 has eight burners 2511, and the second coil circuit board module 252 has six burners.

In addition, although FIG. 6 illustrates that the shapes and sizes of the respective burners 2511 are the same as each other, this is merely an example. Similarly, the shape and size of the burners 2511 may be set to vary according to the size and output of the cooktop 20.

In each of the coil circuit board modules 251, 252, and 253, the working coil patterns 2512 constituting each of the plurality of burners 2511 may be stacked in multiple layers.

In addition, in each of the coil circuit board modules 251, 252, and 253, sensing coil patterns 2514 as a means for detecting whether the container is seated at a specific position may be stacked on the upper surface 21a of the top plate 21.

In addition, a temperature sensor 2515 for sensing a temperature of each of corresponding areas of the top plate 21 may be provided in each of the coil circuit board modules 251, 252, and 253.

In this regard, as will be described later, the working coil pattern 2512, the sensing coil pattern 2514, and the temperature sensor 2515 may be provided in a form integrated with each other in each of the coil circuit board modules 251, 252, and 253. Therefore, a vertical length of the heater 25 of the cooktop 20 according to the present disclosure is significantly reduced compared to the related art, so that the vertical size of the cooktop 20 may be reduced, thereby significantly improving space utilization and significantly simplifying a manufacturing process of the cooktop 20.

Each of the working coil pattern 2512 and the sensing coil pattern 2514 may extend in a spiral shape. The working coil patterns 2512 may be stacked in a vertical direction. The sensing coil patterns 2514 may be stacked in a vertical direction.

In this regard, as will be described below, each of the first to third coil circuit board modules 251, 252, and 253 may be formed in a form in which the working coil patterns 2512 are stacked in 10 to 12 layers and the sensing coil patterns 2514 are stacked in two layers in the vertical direction. Accordingly, each of the coil circuit board modules 251, 252, and 253 may have a multi-layer structure having 12 to 14 layers.

Each sensing coil pattern may be disposed inwardly of an area occupied with the working coil pattern 2512 constituting the individual burner 2511, or may be disposed in an area between a pair of adjacent working coil patterns 2512.

In the present embodiment, a pair of sensing coil patterns 2514 may be disposed inwardly of an area occupied with each working coil pattern 2512, and a pair of sensing coil patterns 2514 may be disposed in an area between the pair of adjacent working coil patterns 2512, as will be described later in consideration of the efficiency and accuracy of container detection.

Each temperature sensor 2515 for sensing the temperature of the top plate 21 may be disposed at a position corresponding to a center of each of the sensing coil patterns 2514.

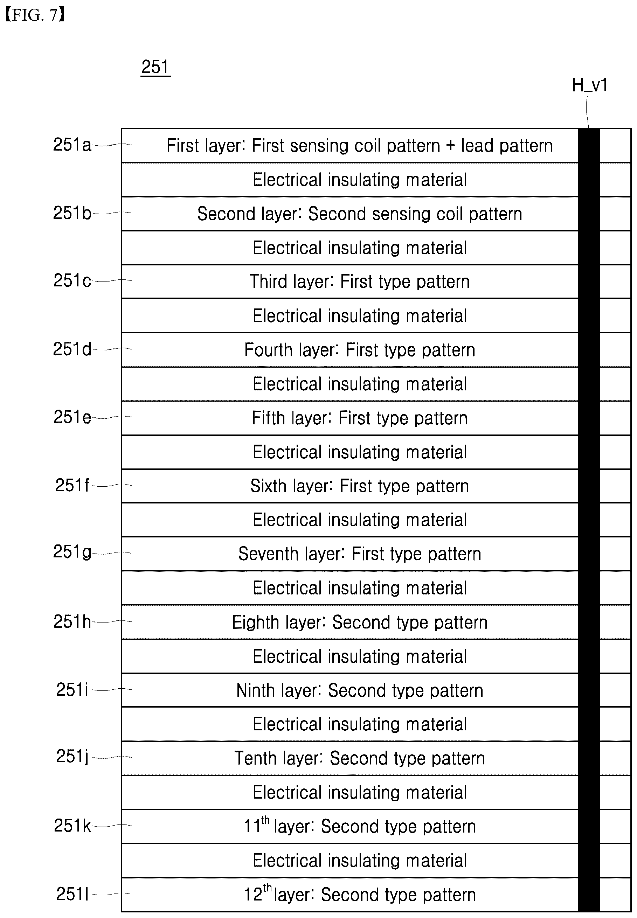

Details of the working coil pattern 2512, the sensing coil pattern 2514, and the temperature sensor 2515 constituting the first to third coil circuit board modules 251, 252, and 253 will be described later with reference to FIG. 7.

The cooktop 20 of the cooking appliance 1 according to an embodiment of the present disclosure may further include the board supporter 26.

The internal components disposed inside the cooktop 20 may be mounted on the board supporter 26 which serves to support the internal components.

More specifically, as illustrated in FIGS. 4 and 5, the first to third coil circuit board modules 251, 252, and 253 and a ferrite core module 27 may be seated on an upper surface of the board supporter 26. Therefore, the board supporter 26 functions as a coil base on which a working coil and a ferrite core are mounted conventionally.

In addition, as shown in FIGS. 4 and 5, several electronic/electrical components 28 constituting the cooktop 20 may be installed under the board supporter 26.

The electronic/electrical components 28 may include a main circuit board 281, an SMPS circuit board (a switching mode power supply device 282), an inverter circuit board 283, a resonance circuit board 284, an EMI filter 285, a blower module 286, a light source module 23, and the like.

These electronic/electrical components 28 may be disposed in a space formed under the board supporter 26 and between the lower surface 24a of the bottom casing 24 and the board supporter 26.

By way of example, in order to effectively accommodate these electronic/electrical components 28, the board supporter 26 may have a box shape turned upside down such that a lower surface thereof facing the bottom casing 24 is entirely open.

Accordingly, the main circuit board 281, the SMPS circuit board (switching mode power supply device) 282, the inverter circuit board 283, the resonance circuit board 284, the EMI filter 285, a blowing fan module 286, and the light source module 23 may be assembled with the board supporter 26 in a stacked manner in an accommodation space formed inside the board supporter 26.

As described above, the first to third coil circuit board modules 251, 252, and 253 are seated on the upper surface of the board supporter 26, and the electronic/electrical component 28 is seated on the lower surface of the board supporter 26 and inside the board supporter 26. Thus, a wiring structure between the electronic/electrical component 28 and a wiring structure between the electronic/electrical component 28 and the first to third coil circuit board modules 251, 252, and 253 may be significantly simplified and simple.

In particular, in a conventional cooktop 20, almost all components need to be disassembled in a reverse order of an assembly process in order to repair the inverter circuit board as a major cause of failure and defect.

On the contrary, in the cooktop 20 of the cooking appliance 1 according to an embodiment of the present disclosure, when only the bottom casing 24 is disassembled in a state in which the cooktop is turned upside down such that the bottom casing 24 faces upwardly, a user may have easy access to the electronic/electrical component 28 such as the inverter circuit board 283, thereby easily repairing or replacing the electronic/electrical component 28 in which a failure has occurred.

In this regard, the assembly process of the cooktop 20 of the cooking appliance 1 according to an embodiment of the present disclosure will be briefly described.

As illustrated in FIG. 5, first, a plurality of ferrite core modules 27 may be assembled to the upper surface 261 of the board supporter 26.

The ferrite core module 27 according to an embodiment of the present disclosure may be configured in a modularized manner by coupling a plurality of ferrite cores to each other. This is devised with taking into account that crack defects or magnetic field loss may occur when a ferrite core formed as a single body and having a relatively large volume is applied.

As described above, the plurality of ferrite cores are modularized to form the ferrite core module 27 which in turn may be installed on the board supporter 26, thereby reducing the number of components and simplifying the assembly process.

By way of example, the ferrite core module 27 may be manufactured in an insert injection manner. As described above, the ferrite core module 27 is manufactured in the insert injection manner, such that a separate jig for fixing the ferrite core unit employed when the cooktop 20 is assembled as in the related art may be omitted.

In addition, as described above, the ferrite cores are modularized to form the plurality of ferrite core modules 27. Thus, even when some of the ferrite cores are damaged, the damaged cores may be repaired via simple replacement of the damaged ones.

When the installation of the plurality of ferrite core modules 27 on the upper surface 261 of the board supporter 26 has been completed, the first to third coil circuit board modules 251, 252, and 253 may be seated on top of the ferrite core modules 27.

Next, in a state in which the first to third coil circuit board modules 251, 252, and 253 have been seated thereon, the board supporter 26 may be turned upside down, and the electronic/electrical components 28 may be assembled.

As described above, several electronic/electrical components 28 may be installed and assembled on the lower surface of the board supporter 26. In this regard, these electronic/electrical components 28 may be installed and assembled on the board supporter 26 while being in a turned upside down state.

The cooktop 20 of the cooking appliance 1 according to an embodiment of the present disclosure may further include an thermal insulator 291 disposed between the first to third coil circuit board modules 251, 252, and 253 and the top plate 21 and on top of the first to third coil circuit board modules 251, 252, and 253.

The thermal insulator 291 is disposed on the upper surface 21a of the top plate 21 and serves to minimize the transfer of heat generated from the container heated by the working coil pattern 2512 to the working coil pattern 2512.

In order to perform such a heat insulation function, the thermal insulator 291 may be disposed in a form of a pad covering an entirety of the first to third coil circuit board modules 251, 252, and 253.

In the present embodiment, the thermal insulator 291 may be divided into a plurality of pads.

More specifically, each of the thermal insulators 291 may be divided into a plurality of pads, each having a width in the left-right direction corresponding to a width in the left-right direction of the burner 2511 formed in each of the first to third coil circuit board modules 251, 252, and 253.

As described above, the thermal insulator 291 is divided into a plurality of thermal insulators 291, such that a predetermined gap may be formed between the adjacent thermal insulators 291. Thus, the visible light generated from the light source module 23 may travel through the predetermined gap and be irradiated to the lower surface of the top plate 21 so that the above-described display line L may be displayed on the top plate 21.

The thermal insulator 291 may additionally serve to electrically insulate the working coil pattern 2512 or the sensing coil pattern 2514 formed in the first to third coil circuit board modules 251, 252, and 253 from the top plate 21.

In this regard, the thermal insulator 291 may be made of a material having both thermal insulation performance and electrical insulation performance.

In one example, although not shown, in order to additionally supplement the electrical insulation performance of the thermal insulator 291, an electrical insulator may be added between the thermal insulator 291 and the top plate 21 and be disposed on top of the thermal insulator 291. By way of example, the electrical insulator may be a mica sheet having a thickness smaller than a vertical thickness of the thermal insulator 291.

### [Detailed configuration of coil circuit board module]

Hereinafter, a detailed configuration of each of the coil circuit board modules 251, 252, and 253 of the cooktop 20 constituting the cooking appliance 1 according to an embodiment of the present disclosure will be described with reference to FIGS. 7 to 16.

As described above, the cooktop of an embodiment of the present disclosure may include the first to third coil circuit board modules 251, 252, and 253.

In this regard, the first to third coil circuit board modules 251, 252, and 253 may be configured in substantially the same manner as each other except for the number of working coil patterns 2512 and the number of sensing coil patterns 2514 constituting the burner 2511.

Therefore, hereinafter, the description will be made based on the first coil circuit board module 251. Unless otherwise described, the description as set forth below may be applied to the second coil circuit board module 252 and the third coil circuit board module 253 in substantially the same manner.

First, as described above, the first coil circuit board module 251 may be formed by stacking the working coil patterns 2512 in multiple layers so as to constitute each of the plurality of burners 2511.

As illustrated in FIG. 7, for example, the first coil circuit board module 251 may include working coil patterns 2512 vertically arranged in a multi-layer structure of 10 layers, sensing coil patterns 2514 vertically arranged in a multi-layer structure of 2 layers, and each electrical insulating material disposed between adjacent ones of the working coil patterns 2512 and the sensing coil patterns 2514 to electrically insulate the adjacent ones from each other.

Therefore, based on the working coil pattern 2512 and the sensing coil pattern 2514, the first coil circuit board module 251 may have a multi-layer structure having a total of 12 layers from a first layer 251a constituting the uppermost layer to the twelfth layer 251l constituting the lowermost layer along the vertical direction.

In this regard, the first sensing coil pattern 2514a constituting the sensing coil pattern 2514 may be disposed at the first layer 251a of the first coil circuit board module 251 having the 12-layers structure.

In addition, a lead pattern 2513 may be disposed at the first layer 251a to electrically connect the first sensing coil pattern 2514a to a signal processor 2518 to be described later or to electrically connect the working coil pattern 2512 disposed at each of the third to twelfth layers 251c, 251d, 251e, 251f, 251g, 251h, 251i, 251j, 251k, and 2511 to a board terminal 2516.

In this regard, the lead pattern 2513 may include a first lead pattern 2513a for electrically connecting the working coil pattern 2512 disposed at each of the third to twelfth layers 251c, 251d, 251e, 251f, 251g, 251h, 251i, 251j, 251k, and 2511 to the board terminal 2516, and a second lead pattern 2513b for electrically connecting the first sensing coil pattern 2514a to the signal processor 2518.

In addition, although not shown in FIG. 7, the temperature sensor 2515 for sensing the temperature of the top plate 21, the board terminal 2516 to which high-frequency power is supplied from the inverter circuit board 283, the signal processor 2518 for processing an output signal of the sensing coil pattern 2514 and an output signal of the temperature sensor 2515, and a third lead pattern 2513c for electrically connecting the temperature sensor 2515 and the signal processor 2518 to each other may be further added to the first layer 251a.

A second sensing coil pattern 2514b constituting the sensing coil pattern 2514 and a second lead pattern 2513b electrically connecting the second sensing coil pattern 2514b to the signal processor 2518 may be disposed at the second layer 251b of the first coil circuit board module 251.

That is, in order to increase the efficiency and effect of sensing of the container, the sensing coil pattern 2514 may include the first sensing coil pattern 2514a disposed at the first layer 251a and the second sensing coil pattern 2514b disposed at the second layer 251b.

In this regard, as will be described later, the first sensing coil pattern 2514a and the second sensing coil pattern 2514b may be configured to be connected in series with each other via a sensing coil via hole H_v2 extending through the first layer 251a and the second layer 251b, thereby serving as the single sensing coil pattern 2514.

The second sensing coil pattern 2514b constituting the sensing coil pattern 2514 may be disposed on the second layer 251b of the first coil circuit board module 251.

As will be described later, the working coil pattern 2512 disposed in the cooktop 20 of the cooking appliance 1 according to an embodiment of the present disclosure may include a first type pattern 2512a and a second type pattern 2512b in which a traveling direction or a winding direction of individual pattern strands 2512a-1 and 2512b-1 are opposite to each other so that the magnetic field may evenly act on the container.

As illustrated in FIG. 7, for example, the working coil pattern 2512 of the first type pattern 2512a may be formed at each of the third to seventh layers 251c, 251d, 251e, 251f, and 251g. In this regard, in the first type pattern 2512a, the traveling direction or the winding direction of the individual pattern strand 2512a-1 is a first direction.

In addition, in an example, the working coil pattern 2512 of the second type pattern 2512b may be formed at each of the eighth to twelfth layers 251h, 251i, 251j, 251k, and 251l. In this regard, in the second type pattern 2512b, the traveling direction or the winding direction of the individual pattern strand 2512b-1 is a second direction.

In this regard, as illustrated, the first lead pattern 2513a formed in the first layer 251a, the first type pattern 2512a disposed in each of the third to seventh layers 251c, 251d, 251e, 251f, and 251g, and the second type pattern 2512b disposed in each of the eighth to twelfth layers 251h, 251i, 251j, 251k, and 2511 may be configured to be collectively connected to each other via a working coil via hole H_v1 continuously extending through the first layer 251a to the twelfth layer 251l.

Accordingly, the plurality of first type patterns 2512a and the plurality of second type patterns 2512b constituting a specific burner among the plurality of burners as described below may be collectively connected in series to each other via the working coil via hole H_v1.

In one example, although not shown, an electrical insulating material may be additionally formed on top of the first layer 251a and under the twelfth layer 251l.

The multi-layer structure of the first coil circuit board module 251 illustrated in FIG. 7 is merely an example.

That is, the multi-layer structure may be modified so that the second sensing coil pattern 2514b is disposed at the sixth layer 251f or the seventh layer 251g serving as a middle layer or disposed at the twelfth layer 251l serving as the lowermost layer as a layer other than the second layer 251b.

In addition, although FIG. 7 illustrates that the first type patterns 2512a are consecutively arranged from the third layer 251c to the seventh layer 251g and the second type patterns 2512b are consecutively arranged from the eighth layer 251h to the twelfth layer 2511, the present disclosure is not limited thereto, and the first type patterns 2512a and the second type patterns 2512b may be alternately and repeatedly arranged with each other vertically.

It will be considered that such a modified example naturally falls within the scope of the present disclosure. However, hereinafter, the description will be given based on the multilayer structure of the first coil circuit board module 251 as shown in FIG. 7. However, the present disclosure is not limited thereto.

In the first coil circuit board module 251 having the multi-multi-layer structure, a shape of the working coil pattern 2512 serving as the second type pattern 2512b may be printed on a copper thin film in a masking manner, an unnecessary portion may be removed using an etching process to form a pattern, and an electrical insulating material may be coated on the formed pattern to form the twelfth layer 251l serving as the lowest layer.

A thickness of the copper thin film applied in this embodiment may be in a range of 0.13mm to 0.15mm, preferably 0.14mm.

Therefore, when additional surface treatment or the like is not performed during the layer formation process, the thickness in the vertical direction of the individual pattern formed via the patterning of the copper thin film may be in a range of 0.13mm to 0.15mm.

In addition, a thickness of the electrical insulating material applied in the present embodiment may be in a range of 0.09mm to 0.11, preferably 0.1mm.

As described above, the twelfth layer 251l serving as the lowermost layer has been formed, and then, the same process as the process of forming the twelfth layer 251l is repeated thereon, thereby constituting the multi-layer structure as shown in FIG. 7.

Therefore, when the formation of the first coil circuit board module 251 having a total of 12 layers has been completed, a thickness of the first coil circuit board module 251 in the vertical direction may be in a range of 2.7mm to 3.3mm, preferably 3 mm.

A means known in the art may be applied to a method for manufacturing the multilayer printed circuit board for forming the first coil circuit board module 251 having the above-described shape and structure, and thus a detailed description of the manufacturing method will be omitted below.

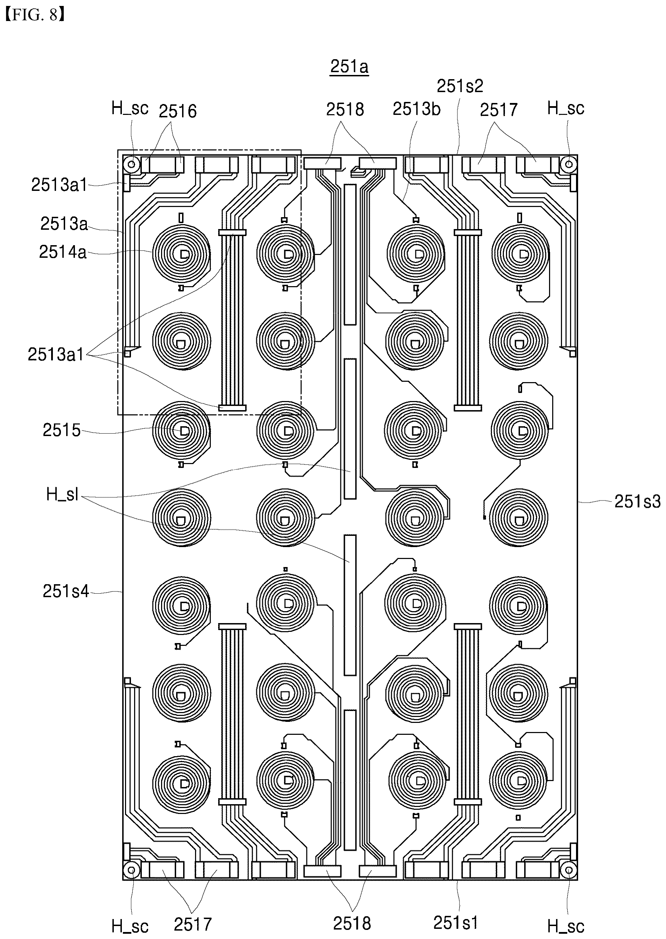

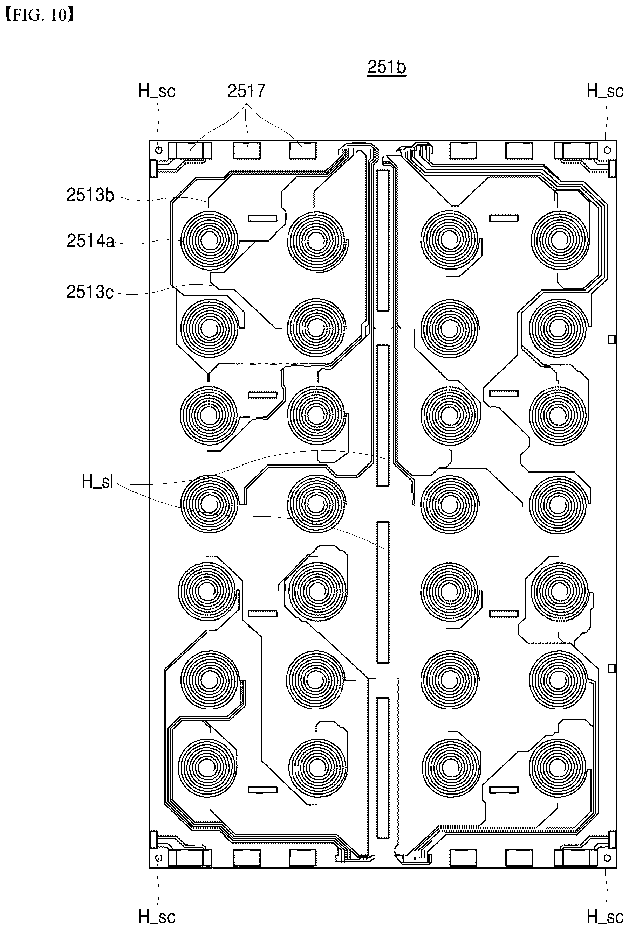

FIG. 8 and FIG. 10 illustrate a plan view of the first layer 251a and the second layer 251b of the first coil circuit board module 251 having the multilayer structure, respectively.

In the present embodiment, the first coil circuit board module 251 may be constructed to have a rectangular plate shape in which a width in the front-rear direction is greater than a width in the left-right direction, based on the state in which the first coil circuit board module 251 is disposed in the cooktop 20. That is, based on the state in which the first coil circuit board module 251 is disposed in the cooktop 20, the first coil circuit board module 251 may have the rectangular plate shape in which each of a front edge 251a and a rear edge 251s2 as outer edges extends along the left-right direction, and each of a left edge 251s3 and a right edge 251s4 as outer edges extends along the front-rear direction.

Correspondingly, each of the first layer 251a serving as the uppermost layer and the second layer 251b serving as the next uppermost layer may be constructed to have a rectangular plate shape in which a width in the front-rear direction is greater than a width in the left-right direction.

As described above, the first sensing coil pattern 2514a constituting one layer of the sensing coil pattern 2514 arranged in two layers may be disposed in the first layer 251a. The second sensing coil pattern 2514b constituting the other layer of the sensing coil pattern 2514 arranged in the two layers may be disposed in the second layer 251b.

In this regard, as illustrated, each of the first sensing coil pattern 2514a and the second sensing coil pattern 2514b may be wound in a shape different from a shape in which the working coil pattern 2512 is wound.

That is, each of the first sensing coil pattern 2514a and the second sensing coil pattern 2514b may be wound in a circular spiral shape. By way of example, each of the first sensing coil pattern 2514a and the second sensing coil pattern 2514b may be set to have a winding number of 18 turns, and an outer diameter thereof may be in a range of 32mm to 34mm, preferably, 33mm. In addition, a width of each of the individual pattern strands constituting each of the first sensing coil pattern 2514a and the second sensing coil pattern 2514b may be in a range of 0.27mm to 0.33mm, preferably 0.3mm.

As will be described later, the working coil pattern 2512 is wound in a quadrilateral spiral shape.

In addition, each of the first sensing coil pattern 2514a and the second sensing coil pattern 2514b is positioned so as to partially overlap the working coil pattern 2512 in the vertical direction.

Accordingly, there is a possibility that a malfunction or a sensing error of each of the first sensing coil pattern 2514a and the second sensing coil pattern 2514b may occur due to the overlapping area.

As described above, each of the first sensing coil pattern 2514a and the second sensing coil pattern 2514b is wound in the circular spiral shape, such that interference between each of the first sensing coil pattern 2514a and the second sensing coil pattern 2514b and the working coil pattern 2512 wound in the quadrilateral spiral shape may be minimized. Thus, the possibility of malfunction and detection error of each of the first sensing coil pattern 2514a and the second sensing coil pattern 2514b may be minimized.

Each of the first sensing coil pattern 2514a and the second sensing coil pattern 2514b may be wound so that a winding start point thereof is not positioned at a center of the circular spiral. That is, a central inner area in which each of the first sensing coil pattern 2514a and the second sensing coil pattern 2514b is not formed may be formed in a center area of the circular spiral shape.

The temperature sensor 2515 may be mounted in the central inner area of each of the first sensing coil pattern 2514a as described below.

A detailed configuration of the arrangement of the temperature sensor 2515 will be described later with reference to FIG. 10.

In the present embodiment, a plurality of first sensing coil patterns 2514a and a plurality of second sensing coil patterns 2514b may be provided.

More specifically, each of some of the plurality of first sensing coil patterns 2514a may be entirely disposed in an area of a specific burner, while each of the others thereof may be disposed across a pair of adjacent burners 2511. Each of some of the plurality of second sensing coil patterns 2514b may be entirely disposed in an area of the specific burner, while each of the others thereof may be disposed across the pair of adjacent burners 2511.

By way of example, in the embodiment as illustrated in FIG. 8, when the first coil circuit board module 251 includes a total of eight burners 2511, a total of 28 first sensing coil patterns 2514a and a total of 28 second sensing coil patterns 2514b may be provided.

However, this is merely an example, and the number of the first sensing coil patterns 2514a may be adjusted to vary according to the size of the individual burner 2511 and the size of the first coil circuit board module 251. However, hereinafter, the description will be made based on an embodiment in which 28 first sensing coil patterns 2514a and 28 second sensing coil patterns 2514b are provided in the first coil circuit board module 251. The present disclosure is not limited thereto.

The first sensing coil patterns 2514a disposed at different positions may be constructed to have substantially the same number of turns, and similarly, the second sensing coil patterns 2514b disposed at different positions may be constructed to have the same number of turns.

A sensing coil via hole H_v2 may be formed at a start point or an end point of the first sensing coil pattern 2514a, and the sensing coil via hole H_v2 may be connected to an end point or a starting point of the second sensing coil pattern 2514b. Accordingly, the first sensing coil pattern 2514a and the second sensing coil pattern 2514b may be connected in series to each other to form the single sensing coil pattern 2514.

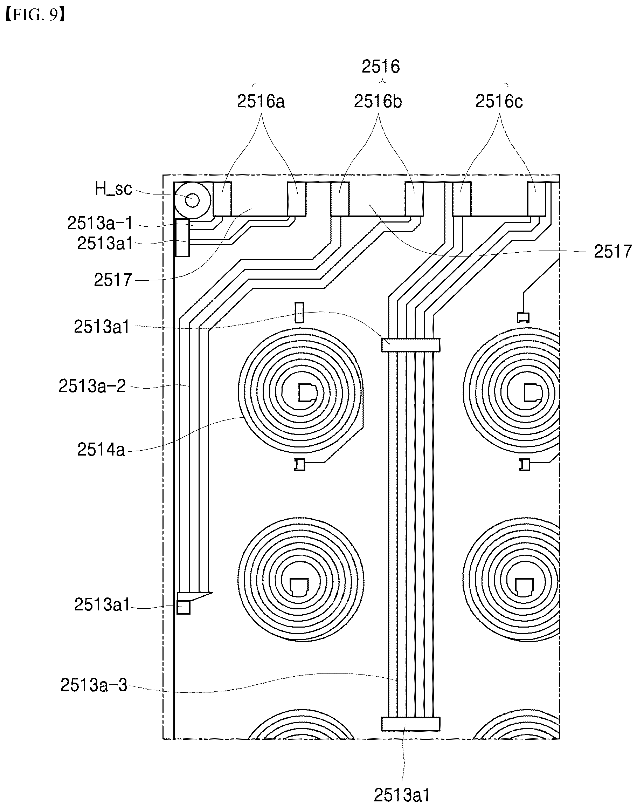

A start point or an end point not connected to the sensing coil via hole H_v2 may be electrically connected to the signal processor 2518 provided in the first layer 251a via the second lead pattern 2513b formed in the first layer 251b or the second layer 251a, as shown in FIGS. 8 and 9.

In one example, the temperature sensor 2515 to be described later may be electrically connected to the signal processor 2518 via the third lead pattern 2513c. As illustrated in FIG. 9, the third lead pattern 2513c may be formed in the second layer 251b.

As illustrated in FIG. 8, when a total of 28 sensing coil patterns 2514 are provided, four signal processors 2518 may be provided by way of example. In this case, one pair of signal processors 2518 may be disposed in a center area of a rear edge 251s2 of the first layer 251a and adjacent to each other, while the other pair of signal processors 2518 may be disposed in a center area of a front edge 251s1 of the first layer 251a and adjacent to each other.

For example, in an embodiment as illustrated in FIG. 8, a group of six sensing coil patterns 2514 which are arranged in the left side among the plurality of sensing coil patterns 2514 which are arranged in the left and right sides and are arranged in an area between a center line in a front-rear direction and the front edge 251s1 of the first layer 251a, and 6 temperature sensors 2515 which are respectively arranged in the six sensing coil patterns 2514 may be allocated to a left signal processor 2518 among the pair of signal processors 2518 disposed at the front edge 251s1 of the first layer 251a. A group of six sensing coil patterns 2514 which are arranged in the right side among the plurality of sensing coil patterns 2514 which are arranged in the left and right sides and are arranged in an area between the center line in a front-rear direction and the front edge 251s1 of the first layer 251a, and 6 temperature sensors 2515 which are respectively arranged in the six sensing coil patterns 2514 may be allocated to a right signal processor 2518 among the pair of signal processors 2518 disposed at the front edge 251s1 of the first layer 251a.

A group of sensing coil patterns 2514 and the temperature sensors 2515 may be allocated to the pair of signal processors 2518 disposed at the rear edge 251s2 of the first layer 251a in the same manner as the allocation manner as described above.

As described above, the two pairs of signal processors 2518 are spaced from each other by the maximum spacing along the front-rear direction, such that the structure of each of the second lead pattern 2513b connecting the individual sensing coil patterns 2514 to the signal processor 2518 and the third lead pattern 2513c connecting the individual temperature sensor 2515 to the signal processor 2518 may be simplified and a length thereof may be minimized.

In one example, as will be described later, the first lead pattern 2513a for transmitting high-frequency power to each of the first type pattern 2512a and the second type pattern 2512b constituting the working coil pattern 2512 may be disposed in the first layer 251a.

As shown, each first lead pattern 2513a may be constructed to be divided into a plurality of pattern strands.

Accordingly, the first lead pattern 2513a is divided into a plurality of pattern strands, so that power loss that may occur due to the skin effect when the high-frequency power is applied thereto may be minimized.

In one example, in consideration of the efficiency of power supply, the plurality of pattern strands may be coupled to each other at one end and the other end of the first lead pattern 2513a to form a common lead terminal 2513a1.

The common lead terminal 2513a1 formed at one end of the first lead pattern 2513a may be connected to the board terminal 2516 formed at each of the front edge 251s1 and the rear edge 251s2 of the first layer 251a.

In one example, the first lead pattern 2513a may be disposed inside the first layer 251a and may extend from one end thereof and may extend toward the common lead terminal 2513a1 formed at the other end thereof.

In one example, in the present embodiment, the high-frequency power may be supplied to the pair of working coil patterns 2512 disposed adjacent to each other via three board terminals 2516 and three first lead patterns 2513a.

That is, when the high-frequency power is supplied to each of the working coil patterns 2512 via the pair of board terminals 2516 and the pair of first lead patterns 2513a, two pairs of board terminals 2516 and two pairs of first lead patterns 2513a should be allocated to the pair of working coil patterns 2512.

In accordance with the present disclosure, the high-frequency power is supplied to the pair of working coil patterns 2512 via the three board terminals 2516 and the three first lead patterns 2513a disposed adjacent to each other, so that the number of the board terminals 2516 and the number of the first lead patterns 2513a may be minimized, and accordingly, the circuit configuration may be simplified.

This will be described in more detail with reference to FIG. 9.

FIG. 9 is a partially enlarged view of FIG. 8, and a detailed configuration of the board terminal 2516 and the first lead pattern 2513a for supplying the power to the pair of working coil patterns 2512 disposed adjacent to each other and in a left rear side based on the state illustrated in FIG. 8 is illustrated.

Based on the illustrated state, the leftmost board terminal 2516 is referred to as a first board terminal 2516a, the middle board terminal 2516 is referred to as a second board terminal 2516b, and the rightmost board terminal 2516 is referred to as a third board terminal 2516c.

In addition, the first lead pattern 2513a connected to the first board terminal 2516a will be referred to as a (1-1)th lead pattern 2513a-1, the first lead pattern 2513a connected to the second board terminal 2516b will be referred to as a (1-2)th lead pattern 2513a-2, and the first lead pattern 2513a connected to the third board terminal 2516c will be referred to as a (1-3)th lead pattern 2513a-3.

As illustrated, the first board terminal 2516a may be electrically connected to an outer common terminal of one working coil pattern 2512 disposed further rearwardly of the other working coil pattern 2512 among the pair of working coil patterns 2512 via the (1-1)th lead pattern 2513a-1.

Hereinafter, the outer common terminal of the working coil pattern 2512 will be referred to as a second common terminal 2512a-3 and 2512b-3, and an inner common terminal of the working coil pattern 2512 will be referred to as a first common terminal 2512a-2 and 2512b-2.

As will be described later, the first common terminal 2512a-2 and 2512b-2 may include the first common terminal 2512a-2 of the first type pattern 2512a and the first common terminal 2512b-2 of the second type pattern 2512b. The first common terminal 2512a-2 of the first type pattern 2512a and the first common terminal 2512b-2 of the second type pattern 2512b may be connected in series to each other via a working coil via hole H_v1. As will be described later, the first common terminal 2512a of the first type pattern 2512a-2 and the first common terminal 2512b of the second type pattern 2512b-2 may be formed at positions vertically overlapping each other.

Similarly, the second common terminal 2512a-3 and 2512b-3 may include the second common terminal 2512a-3 of the first type pattern 2512a and the second common terminal 2512b-3 of the second type pattern 2512b. The second common terminal 2512a-3 of the first type pattern 2512a and the second common terminal 2512b-3 of the second type pattern 2512b may be connected in series to each other via the working coil via hole H_v1. As will be described later, the second common terminal 2512a-3 of the first type pattern 2512a and the second common terminal 2512b-3 of the second type pattern 2512b may be formed at positions vertically overlapping each other.

In this regard, the common lead terminal 2513a1 formed at the other end of the (1-1)th lead pattern 2513a-1 may be formed at a position vertically overlapping the second common terminal 2512a-3 and 2512b-3 of the working coil pattern 2512 disposed at the rear side, and may be connected in series with the second common terminal 2512a-3 and 2512b-3 of the working coil pattern 2512 via the working coil via hole H_v1.

As illustrated, the second board terminal 2516b may be electrically connected to the second common terminal 2512a-3 and 2512b-3 of one working coil pattern 2512 disposed in front of the other working coil pattern 2512 among the pair of working coil patterns 2512 via the (1-2)th lead pattern 2513a-2.

In this regard, the common lead terminal 2513a1 formed at the other end of the first-second lead pattern 2513a-2 may be formed at a position vertically overlapping the second common terminal 2512a-3 and 2512b-3 of one working coil pattern 2512 disposed in front of the other working coil pattern 2512 among the pair of working coil patterns 2512, and may be connected in series with the second common terminal 2512a-3 and 2512b-3 of the working coil pattern 2512 via the working coil via hole H_v1.

In addition, the third board terminal 2516c may be electrically connected to both the first common terminals 2512a-2 and 2512b-2 of the pair of working coil patterns 2512 via the (1-3)th lead pattern 2513a-3.

That is, as illustrated, the (1-3)th lead pattern 2513a-3 may have a common lead terminal 2513a1 formed at the other end thereof. A common lead terminal 2513a1 may be additionally provided at a middle position between one end and the other end of the (1-3)th lead pattern 2513a-3.

The common lead terminal 2513a1 formed at the other end of the (1-3)th lead pattern 2513a-3 may be electrically connected to the first common terminal 2512a-2 and 2512b-2 of one working coil pattern 2512 disposed in front of the other working coil pattern 2512 among the pair of working coil patterns 2512 via the working coil via hole H_v1.

In addition, the common lead terminal 2513a1 formed at the middle position of the (1-3)th lead pattern 2513a-3 may be electrically connected to the first common terminal 2512a-2 and 2512b-2 of one working coil pattern 2512 disposed in rear of the other working coil pattern 2152 among the pair of working coil patterns 2512 via the working coil via hole H_v1.

That is, the (1-3)th lead pattern 2513a-3 may be constructed to act as a common lead pattern capable of supplying the power to both the pair of working coil patterns 2512.

Accordingly, the pair of working coil patterns 2512 may be controlled to work as follows: When only the rear working coil pattern 2512 works, the power is supplied to the first board terminal 2516a and the third board terminal 2516c and power to the second board terminal 2516b is cut off; When only the front working coil pattern 2512 works, the power is supplied to the second board terminal 2516b and the third board terminal 2516c and the power to the first board terminal 2516a is cut off; or When both the pair of working coil patterns 2512 simultaneously work, the power is supplied to all of the first to third board terminals 2516c.

In one example, based on the state illustrated in FIGS. 8 and 9, a plurality of edge notches 2517 may be formed at each of the front edge 251s1 and the rear edge 251s2 of the first layer 251a.

The edge notch 2517 serves to provide a coupling space which a connector (not shown) for supplying the high frequency power to the board terminal 2516 may be fitted into.

As shown, the individual board terminals 2516 may be arranged in a divided manner while the edge notch 2517 is interposed between adjacent ones thereof such that the connector may be connected to the board terminal 2516 while the connector is fitted into the edge notch 2517.

In order to reduce a manufacturing cost via component commonization, the connectors having the same shape and the same structure may be respectively fitted to the edge notches 2517. To this end, the edge notches 2517 may be formed to have the same shape and the same size.

In one example, as illustrated in FIG. 10, the edge notch 2517 may extend through the first layer 251a to the twelfth layer 251l of the first coil circuit board module 251.

In addition, a screw hole H_sc may be formed so as to extend through the first coil circuit board module 251. The screw hole H_sc may be formed to extend through the first layer 251a to the twelfth layer 251l in the same manner as the edge notch 2517 does.

A fastening means such as a screw bolt which is not shown may pass through the screw hole H_sc and be coupled to the above-described board supporter 26. Thus, the first coil circuit board module 251 may be firmly fastened to the above-described board supporter 26.

By way of example, the screw hole H_sc may be disposed at each of four corners so as not to interfere with the patterns constituting the first coil circuit board module 251.

In addition, a ground terminal for grounding the first coil circuit board module 251 may be formed in the first layer 251a and around the screw hole H_sc.

The first coil circuit board module 251 may have a light-transmission slit hole H_sl formed therein to extend through the first layer 251a to the twelfth layer 251l.

The above-described light source module 23 may be disposed under the light-transmission slit hole H_sl, and the visible light generated from the light source module 23 may travel through the light-transmission slit hole H_sl and then be irradiated to the lower surface of the top plate 21. Accordingly, the display line L extending linearly may be displayed in the top plate 21.

In order to implement the display line L extending linearly, the light-transmission slit hole H_sl may extend linearly in a shape corresponding to the shape of the display line L.

However, as illustrated in FIG. 8, in order to prevent the rigidity of the first coil circuit board module 251 from being rapidly degraded, the light-transmission slit hole H_sl may be divided into a plurality of divided holes, and the divided light-transmission slit holes H_sl may be linearly arranged.

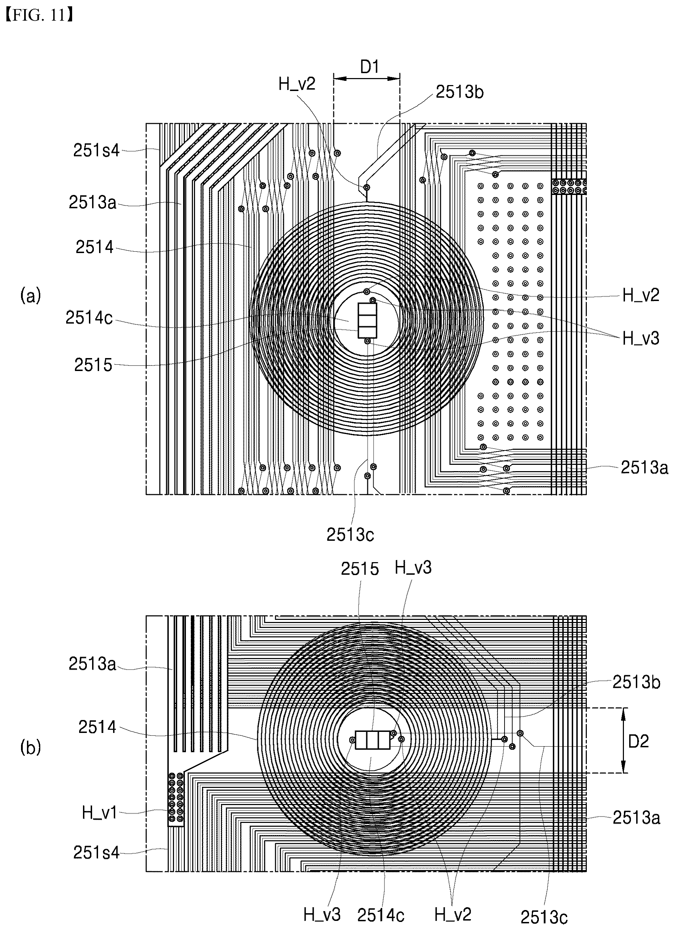

Hereinafter, a relative arrangement position of the sensing coil pattern 2514 and an arrangement and arrangement structure of the temperature sensor 2515 will be described with reference to FIG. 11.

FIG. 11 is a partially enlarged top view of the illustrated first coil circuit board module 251. In FIG. 11, the sensing coil pattern 2514 and the working coil pattern 2512 are shown together with each other for the purpose of description and understanding of relative positions. However, in the present embodiment, because the sensing coil pattern 2514 and the working coil pattern 2512 are actually disposed at different layers, both the sensing coil pattern 2514 and the working coil pattern 2512 may not be observed at the same time.

As described above, the individual sensing coil patterns 2514 wound in the circular spiral shape may be disposed so as to partially overlap the working coil pattern 2512 wound in the quadrilateral spiral shape along the vertical direction.

In this regard, each of some of the plurality of sensing coil patterns 2514 may be entirely disposed inside the single burner 2511 composed of the working coil pattern 2512, while each of the others of the plurality of sensing coil patterns 2514 may be disposed across the pair of adjacent burners 2511.

(a) in FIG. 11 illustrates a state in which the sensing coil pattern 2514 is entirely disposed inside the working coil pattern 2512, and (b) in FIG. 11 illustrates a state in which the sensing coil pattern 2514 is disposed across a pair of adjacent working coil patterns 2512.

First, referring to (a) in FIG. 11, the working coil pattern 2512 formed by stacking the plurality of first type patterns 2512a and the plurality of second type patterns 2512b may be wound a plurality of times to have a quadrilateral spiral shape.

For example, each of the first type patterns 2512a and the second type patterns 2512b constituting the working coil pattern 2512 may be wound a total of nine times. That is, the working coil pattern 2512 may be wound to have 9 turns.

In addition, for example, six to five pattern strands 2512a-1 and 2512b-1 may be bundled with each other to form one bundle which is wound.

In this regard, as illustrated, a spacing between adjacent ones of the turns constituting each of the first type pattern 2512a and the second type pattern 2512b may be maintained to be substantially constant. However, a horizontal spacing between the third turn and the fourth turn may be much larger than a horizontal spacing between adjacent ones of the other turns.

The area corresponding to the relatively larger horizontal spacing may constitute an inner clearance D1.

In addition, an outer clearance D2 as a front-rear clearance similar to the inner clearance D1 may be formed between the pair of working coil patterns 2512 disposed adjacent to each other in the front-rear direction based on a state in which the first coil circuit board module 251 is disposed as illustrated in (b) in FIG. 11.

The inner clearance D1 and the outer clearance D2 may be formed to have the same size, and for example, each of the inner clearance D1 and the outer clearance D2 may be a range of 3.8mm to 4.2mm, and preferably 4 mm.

As illustrated, the sensing coil pattern 2514 may be disposed such that the center point thereof is located in each of the inner clearance D1 and the outer clearance D2.

Preferably, when the center point of the sensing coil pattern 2514 is located in the inner clearance D1 as shown in (a) in FIG. 11, the center point of the sensing coil pattern 2514 may approximately coincide with a middle position of an area between the third turn and the fourth turn.

In addition, preferably, when the center point of the sensing coil pattern 2514 is located in the outer clearance D2 as shown in (b) in FIG. 11, the center point of the sensing coil pattern 2514 may approximately coincide with a middle position of an area between the pair of working coil patterns 2512 disposed adjacent thereto.

In addition, as described above, each of the first sensing coil pattern 2514a and the second sensing coil pattern 2514b has an area in which no pattern is formed. Thus, a central inner area 2514c may be formed inwardly of the sensing coil pattern 2514.

As illustrated, the central inner area 2514c of the sensing coil pattern 2514 may have a disk shape, and a diameter of the disk-shaped inner area may be equal to or slightly smaller than a size of each of the inner clearance D1 and the outer clearance D2.

A combination of the inner clearance D1 and the outer clearance D2 of the working coil pattern 2512 and the central inner area 2514c of the sensing coil pattern 2514 may provide a space in which the temperature sensor 2515 may be mounted.

As illustrated, the temperature sensor 2515 for sensing the temperature of the top plate 21 may be mounted in the first layer 251a and in the central inner area 2514c of each sensing coil pattern 2514. In this regard, the size of each of the inner clearance D1 and the outer clearance D2 and the diameter of the sensing coil pattern 2514 may be larger than a size of the temperature sensor 2515, that is, a longitudinal width thereof.

Accordingly, when being viewed from the top plate 21, the individual temperature sensor 2515 may be disposed in the first layer 251a and in the central inner area 2514c as surrounded with each sensing coil pattern 2514.

In addition, the temperature sensor 2515 may be disposed at a position vertically non-overlapping the sensing coil pattern 2514 and in the central inner area 2514c so that interference between the temperature sensor 2515 and the sensing coil pattern 2514 does not occur.

In one example, in an example, the temperature sensor 2515 may be embodied as a surface mounted devices (SMD) type thermistor in a form of a chip that is relatively small, easily mounted in the first layer 251a, and has excellent sensing capability.

However, when the SMD type thermistor as the temperature sensor 2515is mounted in the first coil circuit board module 251, there is a high possibility that the SMD type thermistor is affected by heat generated from the working coil pattern 2512.

In order that the influence of the heat generation from the working coil pattern 2512 on the SMD type thermistor may be minimized, it is necessary for the SMD type thermistor to be positioned as far as possible from the working coil pattern 2512 along the horizontal direction.

A position of the SMD type thermistor at which the influence of the heat generation thereon may be minimized may be selected from an area in which the central inner area 2514c of the sensing coil pattern 2514 and the inner clearance D1 overlap each other, and an area in which the central inner area 2514c of the sensing coil pattern 2514 and the outer clearance D2 overlap each other.

Although FIG. 11 illustrates that the temperature sensor 2515 is disposed at a position at which a center point of the temperature sensor 2515 and a center point of the central inner area 2514c of the sensing coil pattern 2514 substantially coincide with each other, this is merely an example. The influence of heat generation from the working coil pattern 2512 on the temperature sensor 2515 may be minimized merely by positioning the temperature sensor 2515 at any position in each of the area in which the central inner area 2514c of the sensing coil pattern 2514 and the inner clearance D1 overlap each other and the area in which the central inner area 2514c of the sensing coil pattern 2514 and the outer clearance D2 overlap each other.

In addition, the temperature sensor 2515 may be disposed in each of the area in which the central inner area 2514c of the sensing coil pattern 2514 and the inner clearance D1 overlap each other, and the area in which the central inner area 2514c of the sensing coil pattern 2514 and the outer clearance D2 overlap each other, so that a space in which the third lead pattern 2513c electrically connecting the temperature sensor 2515 to the signal processor 2518 and a temperature sensor via hole H_v3 via which the temperature sensor 2515 and the third lead pattern 2513c are connected to each other are installed may be effectively secured.

In this regard, as illustrated, the temperature sensor 2515 embodied as the SMD-type thermistor may have a first electrode and a second electrode respectively formed at both opposing ends in the longitudinal direction thereof. The first layer 251a may include a pair of pads respectively soldered to the first electrode and the second electrode.

As illustrated, in the present embodiment, a direction in which the first electrode and the second electrode respectively provided at both opposing ends of the temperature sensor 2515 are arranged to be spaced apart from each other may be parallel to the extending direction of the working coil pattern 2512 disposed adjacent to the temperature sensor 2515 or may intersect the extending direction of the working coil pattern 2512. In other words, based on the state shown in (a) in FIG. 11, the direction in which the first electrode 2515c and the second electrode 2515d are arranged to be spaced apart from each other may interest the extension direction of each of the rear edge 251s2 and the front edge 251s1 as the outer edge of the first coil circuit board module 251 and may be parallel to the extension direction of each of the left edge 251s3 and the right edge 251s4 as the outer edge of the first coil circuit board module 251. On the contrary, based on the state shown in (b) in FIG. 11, the direction in which the first electrode 2515c and the second electrode 2515d are arranged to be spaced apart from each other may be parallel to the extension direction of each of the rear edge 251s2 and the front edge 251s1 as the outer edge of the first coil circuit board module 251 and may intersect the extension direction of each of the left edge 251s3 and the right edge 251s4 as the outer edge of the first coil circuit board module 251.

That is, when, as shown in (a) in FIG. 11, the temperature sensor 2515 is disposed in the area of the first clearance D1, the individual pattern strands 2512a-1 and 2512b-1 of the working coil pattern 2512 disposed adjacent to one side of the temperature sensor 2515 may extend in the front-rear direction. Accordingly, the direction in which the first electrode and the second electrode of the temperature sensor 2515 disposed in the area of the first clearance D1 are arranged to be spaced apart from each other may be the front-rear direction or the left-right direction intersecting the front-rear direction.

In addition, when, as illustrated in (b) in FIG. 11, the temperature sensor 2515 is disposed in the area of the second clearance D2, the individual pattern strands 2512a-1 and 2512b-1 of each of the working coil patterns 2512 respectively disposed adjacent to both opposing sides of the temperature sensor 2515 may extend along the left-right direction. Accordingly, the direction in which the first electrode and the second electrode of the temperature sensor 2515 disposed in the area of the second clearance D2 are arranged to be spaced apart from each other may be the left-right direction or the front-rear direction intersecting the left-right direction.

In this regard, a pair of pads respectively corresponding to the first electrode and the second electrode of the temperature sensor 2515 disposed in the area of the first clearance D1 may be arranged in the same direction as the direction in which the first electrode and the second electrode thereof are arranged. A pair of pads respectively corresponding to the first electrode and the second electrode of the temperature sensor 2515 disposed in the area of the second clearance D2 may be arranged in the same direction as the direction in which the first electrode and the second electrode thereof are arranged.

Accordingly, the third lead pattern 2513c for transmitting the electrical signal generated from the temperature sensor 2515 to the signal processor 2518 may extend toward the signal processor 2518 without interference thereof with the working coil pattern 2512 or in a state in which interference thereof with the working coil pattern 2512 is minimized.

More specifically, a portion of the third lead pattern 2513c which overlaps the sensing coil pattern 2514 and extends across the sensing coil pattern 2514 may be disposed in one of the third to seventh layers 251c, 251d, 251e, 251f, and 251g in which the first type pattern 2512a is formed, or may be disposed in one of the eighth to twelfth layers 251h, 251i, 251j, 251k, and 2511 in which the second type pattern 2512b is formed.

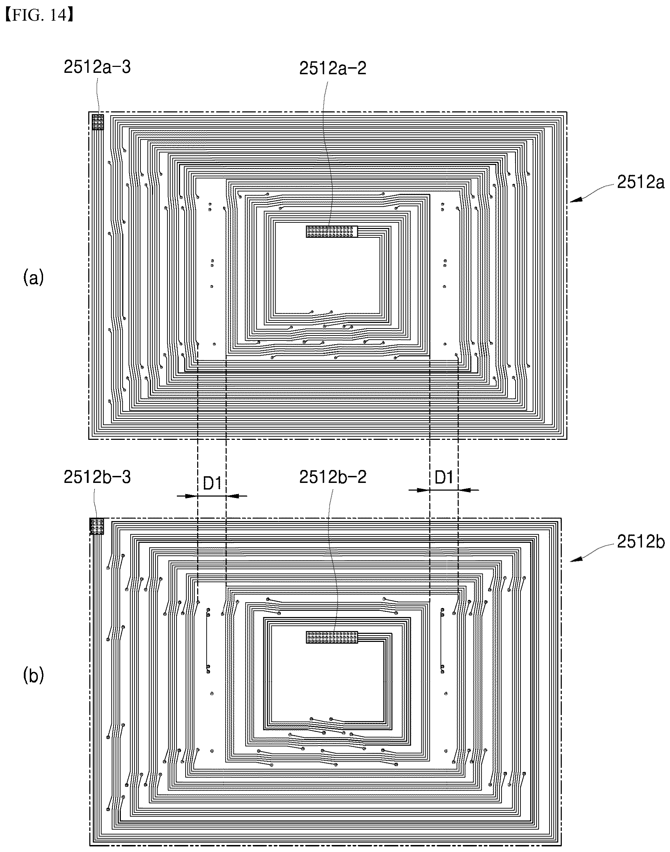

For example, in the present embodiment, as illustrated in FIG. 14, the third lead pattern 2513b may be provided in one of the eighth to twelfth layers 251h, 251i, 251j, 251k, and 2511 in which the second type pattern 2512c is formed, and the third lead pattern 2513c formed in one of the eighth to twelfth layers 251h, 251i, 251j, 251k, and 251l may extend in a parallel manner to the pattern strands 2512b-1 of the second type pattern 2512b while being disposed in each of the first clearance D1 and the second clearance D2.

Accordingly, the third lead pattern 2513c may extend so as to effectively bypass the working coil pattern 2512.

The remaining portion of the third lead pattern 2513c may be disposed in the first layer 251a or the second layer 251b in which interference thereof with the working coil pattern 2512 does not occur, as shown in FIGS. 10 and 11.

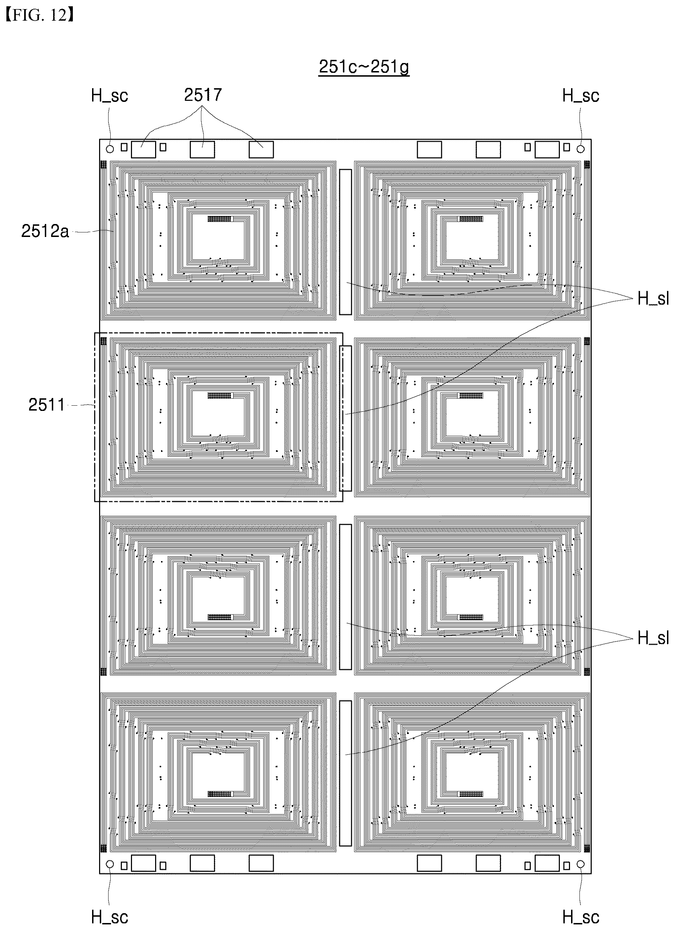

Hereinafter, a detailed configuration of each of the first type pattern 2512a and the second type pattern 2512b constituting the working coil pattern 2512 will be described with reference to FIGS. 12 to 17.

FIG. 12 illustrates a structure in a plan view of the third layer 251c of the first coil circuit board module 251 having a multilayer structure.

A configuration of the third layer 251c of the first coil circuit board module 251 described below may be equally applied to each of the fourth to seventh layers 251d, 251e, 251f, and 251g unless otherwise specified.

Referring to FIG. 12, the first type patterns 2512a of eight working coil patterns 2512 respectively constituting eight burners 2511 may be arranged in the third layer 251c of the first coil circuit board module 251.

As illustrated, one first type pattern 2512a may be allocated to one burner 2511. The first type patterns 2512a may have the same size so that the individual burners 2511 may have the same size.

In this regard, for example, the eight burners 2511 may be arranged in a lattice shape, and accordingly, the first type patterns 2512a may be arranged in a lattice shape.

Accordingly, the first type patterns 2512a are arranged in the lattice shape and each of the first type patterns 2512a may be constructed to be wound in the quadrilateral spiral shape, such that heating areas may be evenly arranged inside the third layer 251c.

In one example, when the plurality of first type patterns 2512a are arranged in the lattice shape as described above, the first type patterns 2512a may be arranged in a symmetrical manner.

That is, the plurality of first type patterns 2512a may be arranged in a left-right symmetrical manner with each other around the light-transmission slit hole H_sl serving as a center line in the left-right direction of the third layer 251c.

In addition, the plurality of first type patterns 2512a may be arranged in a front-rear symmetrical shape with each other around the front-rear center line of the third layer 251c.

Since the plurality of first type patterns 2512a are arranged in the symmetrical manner with each other, a length of the first lead pattern 2513c for supplying the high-frequency power to the individual third layer 251a may be minimized, and the structure of the first lead pattern 2513a may be simplified.

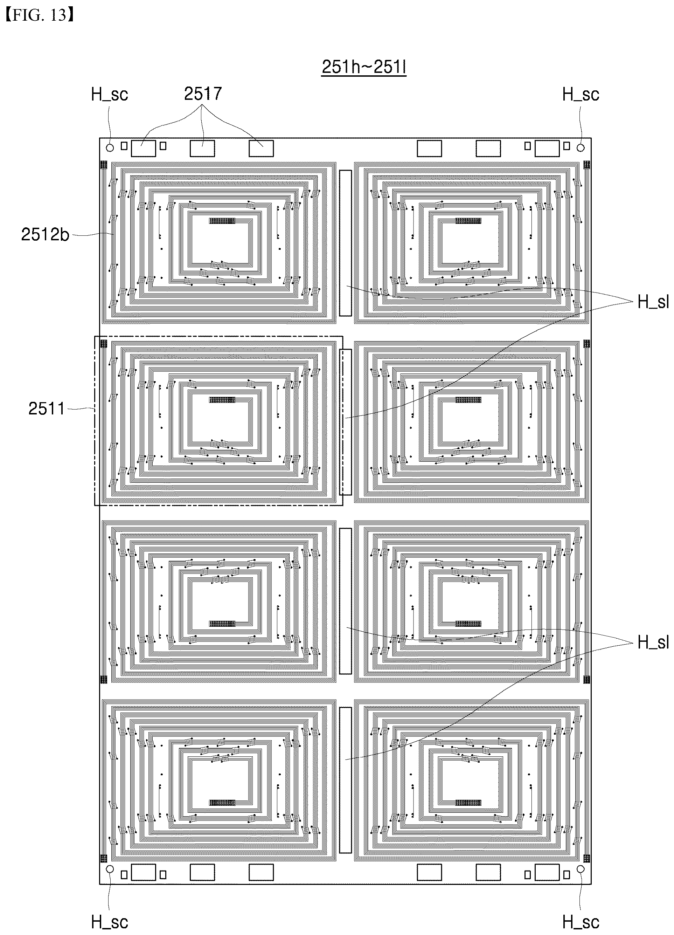

FIG. 13 illustrates a structure in a plan view of the eighth layer 251h of the first coil circuit board module 251 having a multilayer structure.

A configuration of the eighth layer 251h of the first coil circuit board module 251 described below may be equally applied to each of the ninth to twelfth layers 251i, 251j, 251k, and 251l unless otherwise specified.

As illustrated in FIG. 13, the second type patterns 2512b of 8 working coil patterns 2512 respectively constituting eight burners 2511 may be arranged in the eighth layer 251h of the first coil circuit board module 251.

As illustrated, one second type pattern 2512b may be allocated to one burner 2511. The second type patterns 2512b may have the same size so that the individual burners 2511 may have the same size.

In this regard, like the first type pattern 2512a, the second type patterns 2512b may be arranged in a lattice shape.

In addition, like the first type pattern 2512a as described above, the plurality of second type patterns 2512b may be arranged in a left-right symmetrical manner each other around the light-transmission slit hole H_sl, and the plurality of second type patterns 2512b may be arranged in a front-rear symmetrical manner with each other around the center line in the front-rear direction of the eighth layer 251h.

FIG. 14 shows the first type pattern 2512a and the second type pattern constituting one same burner 2511.

The first type patterns 2512a and the second type patterns 2512b illustrated in FIG. 14 may be arranged in a multi-layer structure along the vertical direction as described above so as to constitute the same burner 2511.

As illustrated in FIG. 14, each of the first type pattern 2512a and the second type pattern 2512b constituting the working coil pattern 2512 may be wound in the quadrilateral spiral shape and extend from the first common terminal 2512a-2 and 2512b-2 as the inner common terminal toward the second common terminal 2512a-3 and 2512b-3 as the outer common terminal.

For example, each of the first type pattern 2512a and the second type pattern 2512b may be wound a total of nine windings while extending from the first common terminal 2512a-2 and 2512b-2 to the second common terminal 2512a-3 and 2512b-3. That is, each of the first type pattern 2512a and the second type pattern 2512b may be wound so as to have nine turns.

As illustrated, the first common terminal 2512a-2 and 2512b-2 may be formed at a position eccentric in an outward direction from a center of the burner 2511. That is, an area in which the first type pattern 2512a and the second type pattern 2512b are not formed may be formed in a center of the burner 2511. This is to prevent overheating that may occur when heat generated from the individual pattern strands 2512a-1 and 2512b-1 is concentrated on the center of the burner 2511. Although not shown, a means for preventing overheating of the central area of the burner 2511 may be additionally provided in a form of a via hole in the central area of the burner 2511.

In addition, as described above, while the spacing between adjacent ones of the turns constituting each of the first type pattern 2512a and the second type pattern 2512b is maintained to be substantially constant, the inner clearance D1 in which the temperature sensor 2515 is disposed may be formed between the third turn and the fourth turn.

For example, the first type pattern 2512a may have six pattern strands 2512a-1 bundled with each other to form one turn, and the second type pattern 2512b may have five pattern strands 2512b-1 bundled with each other to form one turn.

Widths of the individual pattern strands 2512a-1 and 2512b-1 constituting each of the first type pattern 2512a and the second type pattern 2512b may be equal to each other and may be in a range of 0.27mm to 0.33mm, preferably 0.3mm.

In this regard, in the first type pattern 2512a, a total of six individual pattern strands 2512a-1 constitute one turn. However, the first type pattern 2512a does not extend from the first turn to the ninth turns only using the six individual pattern strands 2512a-1.

Likewise, in the second type pattern 2512b, a total of five individual pattern strands 2512b-1 constitute one turn. However, the second type pattern 2512b does not extend from the first turn to the ninth turn only using the five individual pattern strands 2512b-1.

That is, while the first type pattern 2512a extends from the first turn to the ninth turn, one turn has been completed, and then, in the next turn, one of the six individual pattern strands 2512a-1 may be terminated, and a new individual pattern strand 2512a-1 may extend. In this way, each of the plurality of pattern strands 2512a-1 may extend in a divided manner.

Similarly, while the second type pattern 2512b extends from the first turn to the ninth turn, one turn has been completed, and then, in the next turn, one of the five individual pattern strands 2512b-1 may be terminated, and a new individual pattern strand 2512b-1 may extend. In this way, each of the plurality of pattern strands 2512b-1 may extend in a divided manner.

As described above, the first type pattern 2512a may be composed of the plurality of individual pattern strands 2512a-1 extending in the divided manner. The second type pattern 2512b may be composed of the plurality of individual pattern strands 2512b-1 extending in the divided manner. Thus, the wires may be bundled with each other in a similar manner to the Litz wire applied to the conventional cooktop.

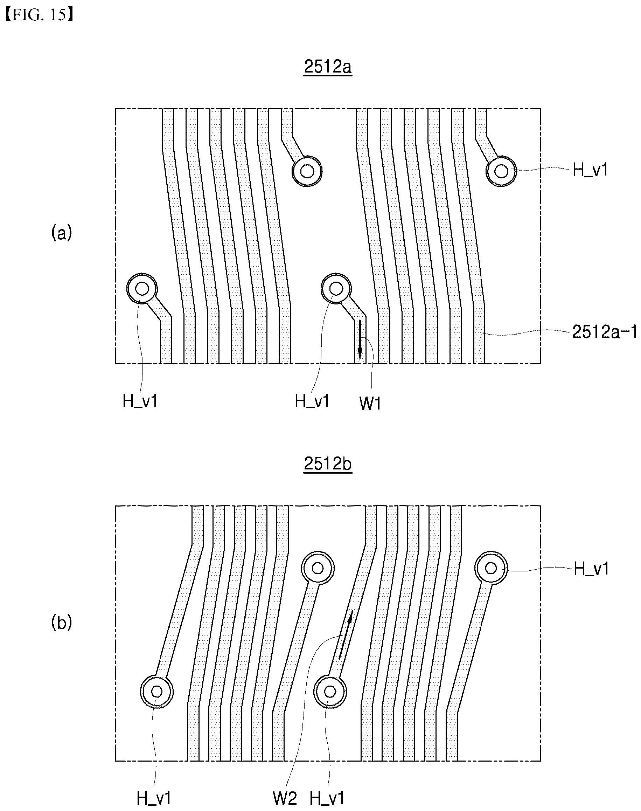

In this regard, as illustrated in FIG. 15, the start point and the end point of the individual pattern strands 2512a-1 of the first type pattern 2512a arranged to constitute a new turn and the start point and the end point of the individual pattern strands 2512b-1 of the second type pattern 2512b arranged to constitute a new turn may be connected in series with each other via the working coil via holes H_v1, respectively.

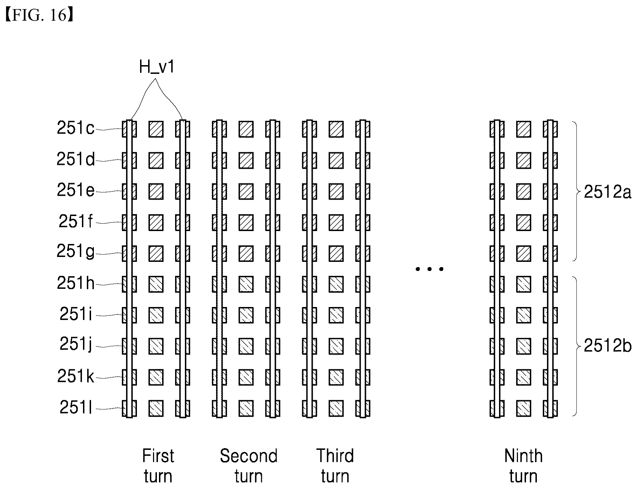

In this regard, each of the working coil via holes H_v1 respectively connecting the start point and the end point of the individual pattern strands 2512a-1 of the first type pattern 2512a to the start point and the end point of the individual pattern strands 2512b-1 of the second type pattern 2512b may extend entirely from the third layer 251c to the twelfth layer 251l as shown in FIG. 16 to collectively connect the individual pattern strands 2512a-1 and 2512b-1 disposed in all of the layers to each other.

However, as illustrated in FIG. 15, the direction in which the individual pattern strands 2512a-1 constituting the first type pattern 2512a extend and the direction in which the individual pattern strands 2512b-1 constituting the second type pattern 2512b extend may be opposite to each other.

For example, the individual pattern strands 2512a-1 constituting the first type pattern 2512a may extend in a first direction W1, while the individual pattern strands 2512b-1 constituting the second type pattern 2512b may extend in a second direction W2 opposite to the first direction W1.

For example, as illustrated, the first direction W1 may be a clockwise direction, and the second direction W2 may be a counterclockwise direction.

Accordingly, when the high frequency power is supplied via the same working coil via hole H_v1, currents having opposite flow directions may flow through the individual pattern strands 2512a-1 of the first type pattern 2512a and the individual pattern strands 2512b-1 of the second type pattern 2512b which are simultaneously electrically connected to the same working coil via hole H_v1, and thus, magnetic fields may be generated in opposite directions from the first type pattern 2512a and the second type pattern 2512b.

As described above, the magnetic fields in the opposite directions are respectively generated from the first type pattern 2512a and the second type pattern 2512b, such that the dispersion effect of the magnetic field may be generated similarly to the conventional Litz wire constructed in a twisted shape.

Accordingly, the magnetic fields generated from the first type pattern 2512a and the second type pattern 2512b are uniformly transmitted to the container without being concentrated on a specific portion of the container, thereby improving heating efficiency and heating effect of the container.

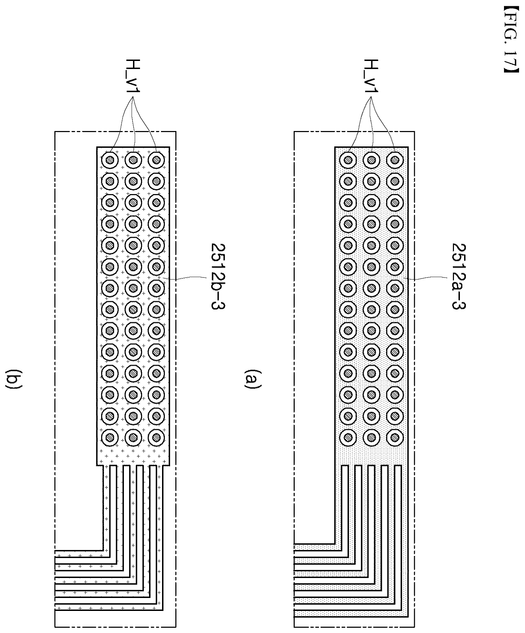

In one example, as illustrated in FIG. 17, a plurality of working coil via holes H_v1 may be formed in each of the first common terminal 2512a-2 of the first type pattern 2512a and the first common terminal 2512b-2 of the second type pattern 2512b in order to minimize loss due to resistance.

Each of the plurality of working coil via holes H_v1 may be formed to extend through the first layer 251a to the twelfth layer 251a so as to be electrically connected to the first lead pattern 2513a formed in the first layer 251l.

As the common working coil via hole H_v1 is formed so as to extend through all of the layers, the heat generated from the individual working coil pattern 2512 may be effectively discharged from the first coil circuit board module 251 through the working coil via hole H_v1. That is, the working coil via hole H_v1 may act as a ventilation hole for preventing overheating of the first coil circuit board module 251.

Although not shown in FIG. 17, like the first common terminal 2512a-2 and 2512b-2, a plurality of working coil via holes H_v1 may be formed in each of the second common terminal 2512a-3 of the first type pattern 2512a and the second common terminal 2512b-3 of the second type pattern 2512b so as to extend through the first layer 251a to the twelfth layer 251l.

### [Detailed structure and arrangement structure of temperature sensor]

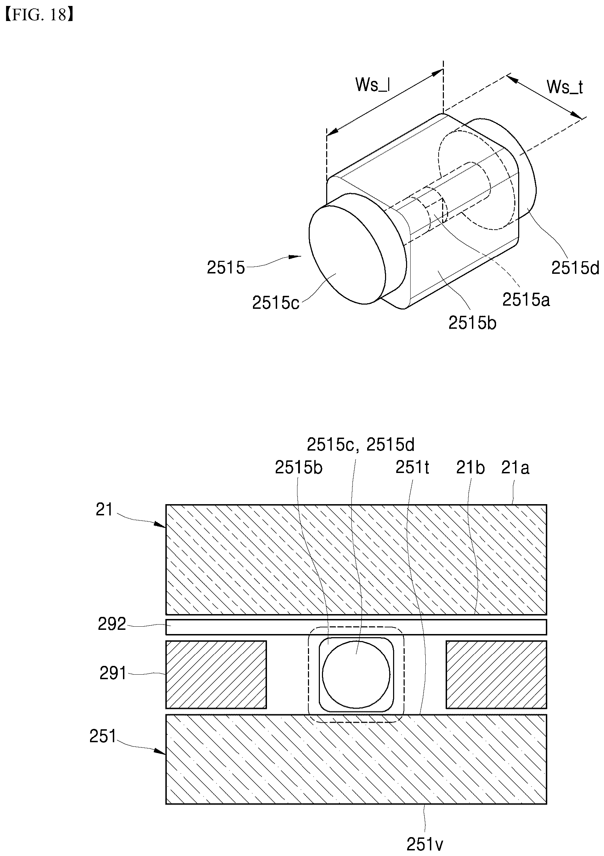

Hereinafter, a detailed structure of the temperature sensor 2515 provided in the cooktop 20 of the cooking appliance 1 and a structure in which the temperature sensor 2515 is disposed in the coil circuit board module 251, 252, and 253 according to an embodiment of the present disclosure will be described with reference to FIGS. 18 to 28.

As described above, the cooktop 20 of the cooking appliance 1 according to an embodiment of the present disclosure may be provided with the temperature sensor 2515 for sensing the temperature of the top plate 21. The temperature sensor 2515 may be mounted on an upper end surface of the coil circuit board module 251, 252, and 253 in a state surrounded with the sensing coil pattern 2514.

That is, the temperature sensor 2515 may be mounted on each of the coil circuit board modules 251, 252, and 253, and may be disposed on the upper surface of each of the coil circuit board modules 251, 252, and 253 facing the top plate 21.

In this regard, as described above, the SMD type thermistor may be applied to the temperature sensor 2515 to facilitate integration with each of the coil circuit board modules 251, 252, and 253 via mounting thereon on each of the coil circuit board modules 251, 252, and 253.

FIG. 18 illustrates the SMD-type thermistor applied as the temperature sensor 2515 and a state in which the temperature sensor 2515 is mounted on the first coil circuit board module 251. Hereinafter, following descriptions will be based on a state in which the temperature sensor 2515 is disposed on the first coil circuit board module 251 as illustrated, by way of example. The configuration described below may be equally applied to each of the second coil circuit board module 252 and the third coil circuit board module 253 unless otherwise specified.

Referring to FIG. 18, the temperature sensor 2515 embodied as the SMD-type thermistor may include a sensing chip 2515a generating an output signal related to the sensed temperature, a sensor body 2515b accommodating the sensing chip 2515a therein, and a first electrode 2515c and a second electrode 2515d spaced apart from each other while the sensor body 2515a is interposed therebetween and electrically connected to the sensing chip 2515a, respectively.

FIG. 18 illustrates an example of the SMD-type thermistor in which the sensing chip 2515a is disposed inside the sensor body 2515b having a rectangular pillar shape, and the first electrode 2515c and the second electrode 2515d are disposed at both opposing ends along a longitudinal direction of the temperature sensor 2515 of the sensor body 2515b, respectively.

In this regard, each of the first electrode 2515c and the second electrode 2515d may be provided in a form of a cylinder or a disk protruding from each of both longitudinal ends of the sensor body 2515b so as to extend away from the sensor body 2515b. Each of the first electrode 2515c and the second electrode 2515d may be directly soldered to and contact and be connected to a sensor pad P_s formed on an upper end surface 251t of the first coil circuit board module 251.

The sensor pad P_s contacts and is connected to the above-described third lead pattern 2513c, and the output signal of the first electrode 2515c and the second electrode 2515d may be transmitted to the signal processor 2518 via the sensor pad P_s and the third lead pattern 2513c.

In this regard, the SMD type thermistor acting as the temperature sensor 2515 as described above in accordance with the present disclosure may be formed in various shapes and various structures as known in the art and may be applied to the cooktop of the present disclosure. The present disclosure will be described below based on the configuration of the SMD-type thermistor illustrated in the drawing by way of example. However, the present disclosure is not limited thereto.

As described above, the temperature sensor 2515 may be embodied as the SMD-type thermistor having a small chip shape so as to be easily mounted on the upper end surface 251t of the first coil circuit board module 251 and to be easily positioned in the central inner area 2514c of the sensing coil pattern 2514.

For example, the temperature sensor 2515 may be embodied as the SMD-type thermistor in which a longitudinal width from an end surface of the first electrode 2515a to an end surface of the second electrode 2515d is about 3.2mm, and each of a transverse width and a vertical width is about 1.65mm.

In particular, the sensor body 2515b of the temperature sensor 2515 serving as a temperature sensing surface may have a size in which a longitudinal width Ws_1 is about 2.3mm and a transverse width Ws_t is about 1.65mm.

In one example, as illustrated in FIG. 18, when the temperature sensor 2515 is mounted on the upper end surface 251t of the first coil circuit board module 251, a portion of the outer surface of the sensor body 2515b acting as the temperature sensing surface, that is, a portion of a lower surface of the sensor body based on the illustrated state may be disposed to directly contact the upper end surface of the first coil circuit board module 251.

In this regard, as described above, the thermal insulator 291 may be disposed between the first coil circuit board module 251 and the top plate 21.

As illustrated, in order to easily sense the temperature of the top plate 21, an opening may be formed in the thermal insulator 291 to prevent interference thereof with the temperature sensor 2515.

In addition, the upper surface of the sensor body 2515b of the temperature sensor 2515 may directly contact the lower surface 21b of the top plate 21 to sense the temperature of the top plate 21, or may indirectly sense the temperature of the lower surface 21b of the top plate 21 via the electrical insulating material 292 as shown.

In one example, as described above, the temperature sensor 2515 is constructed to be disposed in each of the inner clearance D1 and the outer clearance D2 of the working coil pattern 2512, and thus the temperature sensor 2515 is disposed at a position very adjacent to the pattern strands 2512a-1 and 2512b-1 constituting the working coil pattern 2512 based on the horizontal direction.

In this regard, when the high-frequency power is applied to the working coil pattern 2512 to heat the container, each of the pattern strands 2512a-1 and 2512b-1 acts as a resistor, and thus a considerable amount of heat is generated therefrom, and the heat generated from the pattern strands 2512a-1 and 2512b-1 may be transmitted to the sensor body 2515b of the temperature sensor 2515 in a conduction manner.

Due to the arrangement structure of the temperature sensor 2515, the temperature sensed by the temperature sensor 2515 may have a problem of following the temperature of the first coil circuit board module 251 rather than the temperature of the top plate 21.

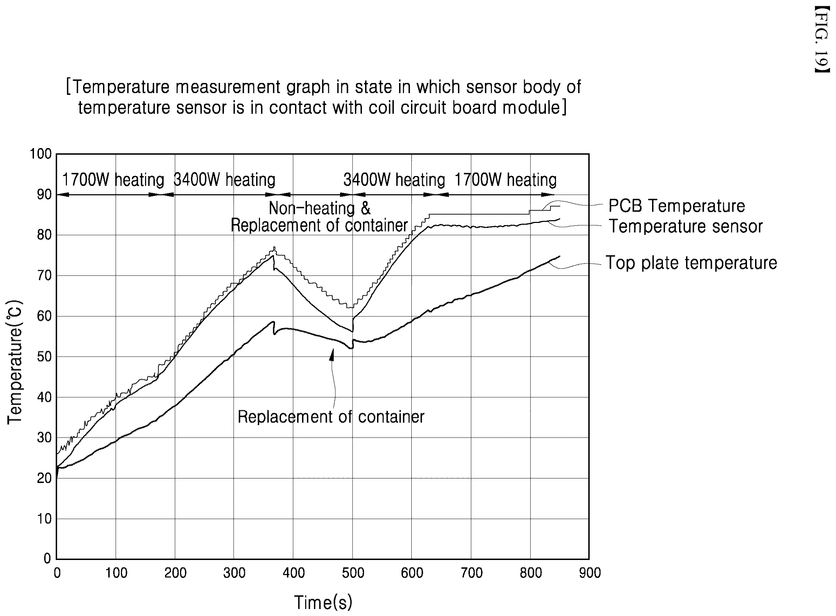

This will be described based on the experimental result shown in FIG. 19.

An experimental result in which the temperature is measured based on the configuration in which the outer surface of the sensor body 2515b of the temperature sensor 2515 is disposed to be in direct contact with the upper end surface 251t of the first coil circuit board module 251 is shown.

The experimental condition is as follows.

First, power of 1700W was supplied to the working coil pattern 2512 of the first coil circuit board module 251 for a first time (about 180 seconds), and then power of 3400W was supplied thereto for a second time (about 200 seconds).

Thereafter, the power supply was cut off for a third time (about 100 seconds) and the container seated on the top plate 21 was replaced with another container. After the container was replaced with another container, 3400W and 1700W of power were sequentially supplied for a fourth time (about 180 seconds) and a fifth time (about 200 seconds), respectively.

In order to determine a temperature change pattern sensed by the temperature sensor 2515 according to the present disclosure, the temperature of the top plate 21 and the temperature of the first coil circuit board module 251 were measured using a separate experimental sensor.

As shown in FIG. 19, it is identified that the temperature change pattern sensed by the temperature sensor 2515 clearly follows the temperature change of the first coil circuit board module 251 during an entirety of each of a rising period and a falling period of the temperature.

That is, it has been identified that the temperature sensor 2515 is more greatly affected by the temperature of the first coil circuit board module 251 rather by the temperature of the top plate 21 as a main measurement target. This may be determined to be due to be a phenomenon that occurs because the sensor body 2515b of the temperature sensor 2515 is disposed to directly contact the upper surface 251t of the first coil circuit board module 251.

Because the temperature sensor 2515 is mounted on the upper end surface 251t of the first coil circuit board module 251, the present disclosure provides a means capable of minimizing or preventing the phenomenon in which the temperature sensing of the temperature sensor 2515 follows the temperature of the first coil circuit board module 251 rather than the temperature of the top plate 21.

In order to solve the phenomenon in which the temperature sensing of the temperature sensor 2515 follows the temperature of the first coil circuit board module 251, the temperature sensor 2515 constituting the cooktop 20 of the cooking appliance 1 according to the present disclosure may be constructed to be mounted on the upper surface 251t of the first coil circuit board module 251 in a state in which the sensor body 2515a is isolated from the first coil circuit board module 251.

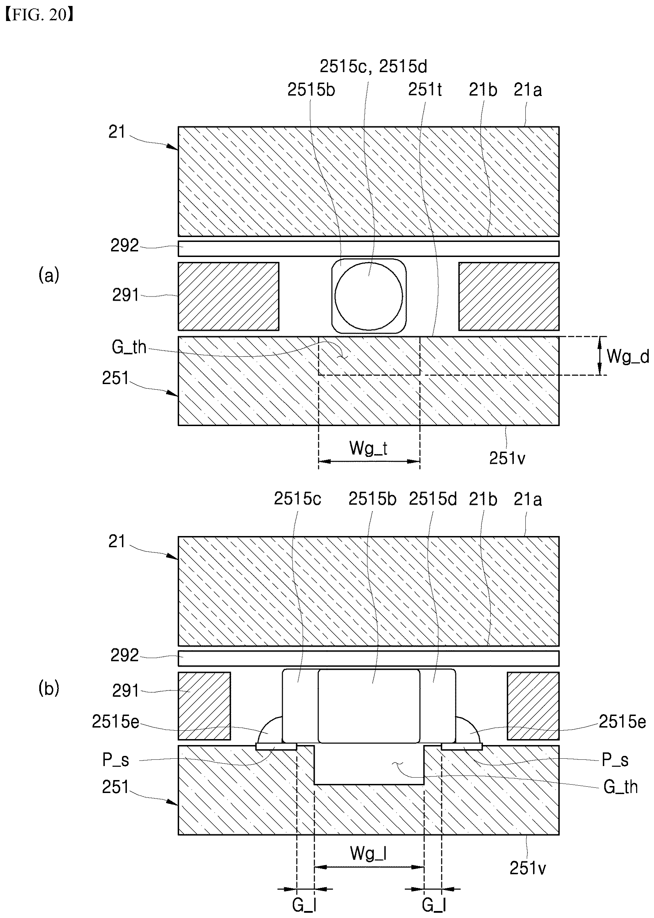

FIG. 20 illustrates a configuration in which the sensor body 2515b of the temperature sensor 2515 is isolated from the first coil circuit board module 251 via a concave groove G_th formed in the first coil circuit board module 251 according to the first embodiment of the present disclosure.

Referring to (a) and (b) in FIG. 20, in a state in which the temperature sensor 2515 is mounted on the first coil circuit board module 251, the concave groove G_th may be defined under the sensor body 2515a of the temperature sensor 2515 and depressed in the upper end surface 251t of the first coil circuit board module 251 in a direction away from the sensor body 2515b.

In this regard, as illustrated, in each of the longitudinal and transverse directions of the temperature sensor 2515, a longitudinal width Wg_1 of the concave groove G_th may be greater than a longitudinal width of the sensor body 2515b of the temperature sensor 2515.

In addition, a transverse width Wg_t of the concave groove G_th may be greater than a transverse width of the sensor body 2515b of the temperature sensor 2515.

That is, as the concave groove G_th is sized such that the longitudinal width Ws_1 of the sensor body 2515b is smaller than the longitudinal width Wg_1 of the concave groove G_th and the transverse width Ws_t of the sensor body 2515b is smaller than the transverse width Wg_t of the concave groove G_th, the sensor body 2515b of the temperature sensor 2515 may be entirely isolated from the upper end surface 251t of the first coil circuit board module 251.

However, in order to maintain the electrical connection between the first electrode 2515c and the second electrode 2515d, the longitudinal width Wg_1 of the concave groove G_th may be smaller than the entire longitudinal width of the temperature sensor 2515.

Therefore, as illustrated, the heat generated from the working coil pattern 2512 may be conducted to the temperature sensor 2515 via a soldering portion 2515e of each of the first electrode 2515c and the second electrode 2515d of the temperature sensor 2515. However, a structure in which the sensor body 2515b having a contact area greater than a sum of contact areas of the first electrode 2515c and the second electrode 2515d with the working coil pattern 2512 is entirely isolated from the first coil circuit board module 251 may be realized.

Accordingly, an area in which the temperature sensor 2515 is in physical contact with the first coil circuit board module 251 may be minimized, so that the heat generated from the working coil pattern 2512 and conducted to the temperature sensor 2515 may be minimized, and the accuracy of temperature sensing of the container or the top plate 21 may be improved.

In one example, as illustrated, a depth of the concave groove G_th may be limited to a value smaller, by a predetermined value, than a thickness in the vertical direction of the first coil circuit board module 251.

More specifically, the depth of the concave groove G_th may be set to be smaller than or equal to half the thickness of the first coil circuit board module 251 in the vertical direction.

That is, when, as described above, the first coil circuit board module 251 is composed of a total of 12 layers, the first coil circuit board module 251 may be formed to have a vertical thickness of about 3 mm.

Accordingly, when the concave groove G_th is formed to a depth equal to or greater than half the thickness of the first coil circuit board module 251 in the vertical direction, the thickness in the vertical direction of a portion of the first coil circuit board module 251 corresponding to the concave groove G_th is 1.5mm or smaller. Thus, there is a high possibility that the portion thereof may be easily damaged. In consideration of this situation, the thickness range of the concave groove G_th may be selected to be equal to or greater than half the thickness in the vertical direction of the first coil circuit board module 251.

In one example, as described above, the pair of sensor pads P_s respectively connected to the first electrode 2515c and the second electrode 2515d via the pair of soldering portions may be formed at the upper end surface 251a of the first coil circuit board module 251.

In this regard, as shown in (b) in FIG. 20, a longitudinal distance between the pair of sensor pads P_s based on the longitudinal direction of the temperature sensor 2515 should be greater than the longitudinal distance of the concave groove G_th.

More specifically, a relative position of the concave groove G_th may be set so that a predetermined longitudinal spacing G_1 is defined between the concave groove G_th and each of the pair of sensor pads P_s.

In one example, the predetermined longitudinal spacing G_1 may have a range of 0.9mm to 1.1mm, may be preferably 1 mm.

As described above, the longitudinal spacing of about 1 mm is defined between each of the pair of sensor pads P_s and the concave groove G_th, such that damage to the sensor pad P_s may be prevented during processing of the first coil circuit board module 251 for forming the concave groove G_th.

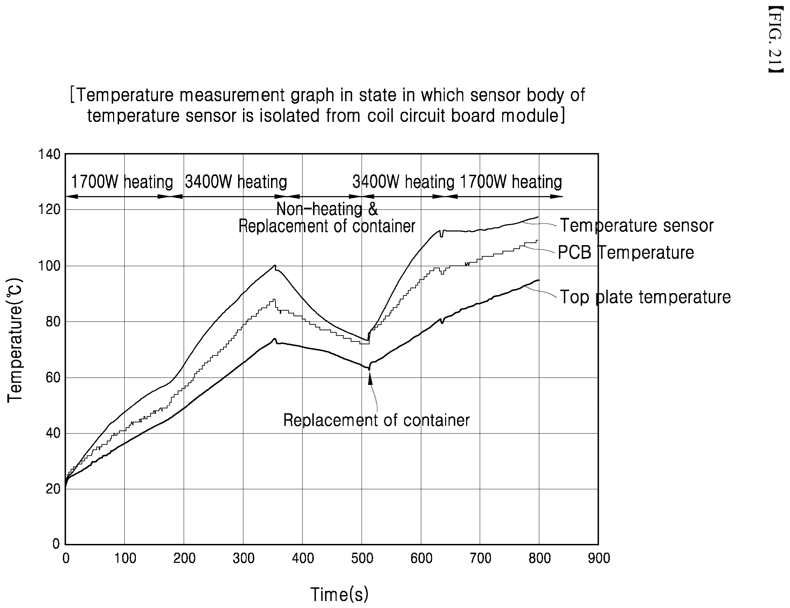

FIG. 21 illustrates an experimental result in which the temperature is measured based on the configuration in which the concave groove G_th is formed in the upper end surface 251t of the first coil circuit board module 251 according to the first embodiment of the present disclosure.

For comparative verification, experiments and measurements were performed under the same conditions as the experimental conditions shown in FIG. 19.

As shown in FIG. 21, it has been identified that the temperature output from the temperature sensor 2515 generally changes along a middle value between the temperature of the top plate 21 and the temperature of the first coil circuit board module 25l, while the change of the temperature follows the temperature change of the top plate 21 rather than the temperature change of the first coil circuit board module 251 throughout the temperature rising period and the temperature falling period.

Thus, it may be identified that the heat generated from the working coil pattern 2512 and conducted to the temperature sensor 2515 may be minimized by simply isolating the sensor body 2515b of the temperature sensor 2515 from the upper surface 251t of the first coil circuit board module 251 via the concave groove G_th, and the temperature sensed by the temperature sensor 2515 may clearly follow the temperature of the top plate 21.

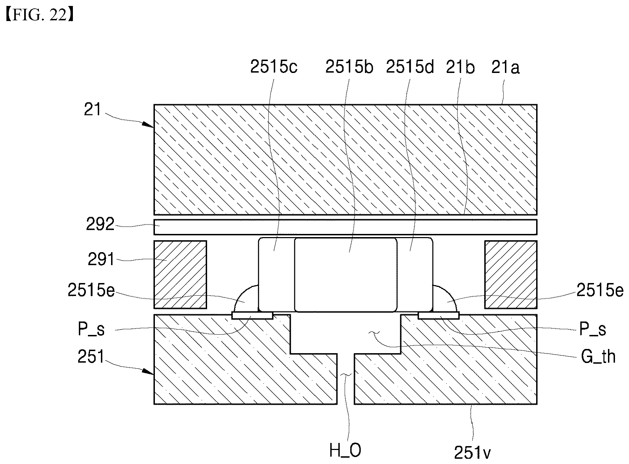

In one example, FIG. 22 illustrates a configuration in which a through-hole H_O is further formed in addition to the concave groove G_th formed in the first coil circuit board module 251 according to a second embodiment of the present disclosure.

As illustrated, the through-hole H_O may be continuously formed to extend from a lower surface of the concave groove G_th through the first coil circuit board module 251 to the lower surface 251v of the first coil circuit board module 251.

In this regard, the horizontal cross-sectional area size of the through-hole H_O may be smaller than the horizontal cross-sectional area size of the concave groove G_th.

In the illustrated embodiment, one through-hole H_O is illustrated as being provided. However, a plurality of through-holes H_O may be provided according to the cross-sectional area of the through-hole H_O and the size of the concave groove G_th.

As at least one through-hole H_O communicating with the concave groove G_th is added as described above, the through-hole H_O may function as a ventilation hole for communicating the upper end surface 251t and the lower end surface 251v of the first coil circuit board module 251 with each other.

Overheating of the first coil circuit board module 251 due to heat generation of the working coil pattern 2512 may be prevented due to the through-hole H_O functioning as the ventilation hole. Thus, an effect of preventing overheating of the temperature sensor 2515 itself may be expected at the same time.

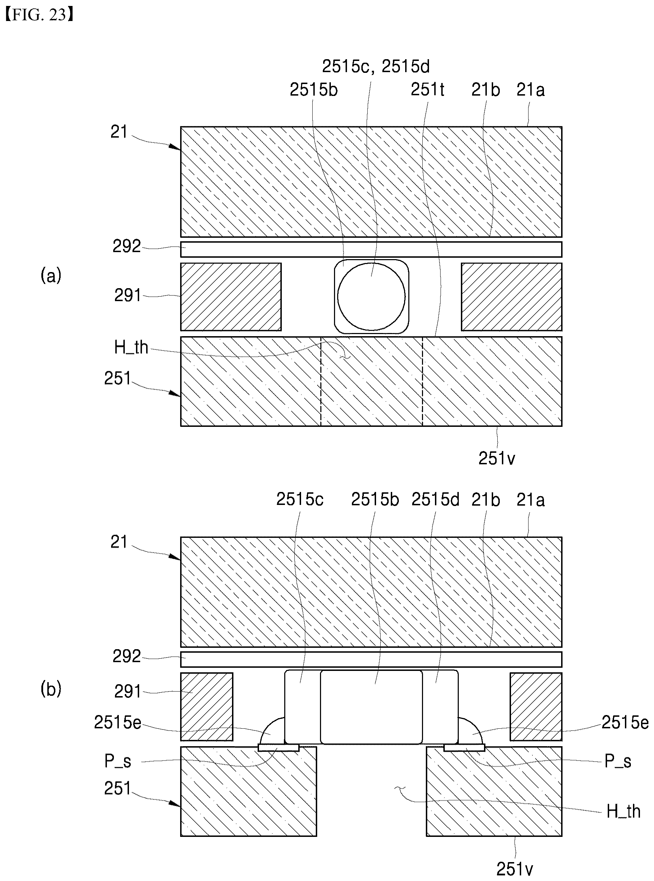

In one example, FIG. 23 illustrates a configuration in which a through-hole H_th formed in the first coil circuit board module 251 isolates the sensor body 2515b of the temperature sensor 2515 from the first coil circuit board module 251 according to a third embodiment of the present disclosure.

Referring to (a) and (b) in FIG. 23, in a similar manner to the concave groove G_th of the first embodiment as described above, in a state in which the temperature sensor 2515 is mounted on the first coil circuit board module 251, the through-hole H_th may be disposed under the sensor body 2515b of the temperature sensor 2515 and formed to extend through the upper end surface 251t to the lower end surface 251v of the first coil circuit board module 251.

In addition, like the concave groove G_th, a longitudinal width of the through-hole H_th may be greater than the longitudinal width Ws_1 of the sensor body 2515b of the temperature sensor 2515 in each of the longitudinal and transverse directions of the temperature sensor 2515.

In addition, a transverse width of the through-hole H_th may be greater than the transverse width of the sensor body 2515b of the temperature sensor 2515.

As the through-hole H_th is formed in the first coil circuit board module 251, the sensor body 2515b of the temperature sensor 2515 may be entirely isolated from the upper end surface 251t of the first coil circuit board module 251.

As described above, based on the longitudinal direction of the temperature sensor 2515, the through-hole H_th may be constructed to have a slit shape having a longitudinal width greater than a transverse width.

Therefore, the through-hole H_th of the third embodiment may be constructed in such a manner that the concave groove G_th of the first embodiment is formed to extend through the first coil circuit board module 251 more deeply.

The formation of the through-hole H_th having the slit shape as described above may be suitable when it is difficult to machine the concave groove G_th of the first embodiment or when the thickness in the vertical direction of the portion in which the concave groove G_th is formed is too small in machining the concave groove G_th.

For example, in a case in which the first coil circuit board module 251 is composed of a total of at least six layers, the thickness of the first coil circuit board module 251 in the vertical direction may be 1.5mm or smaller, such that it is difficult to form the concave groove G_th. In this case, the formation of the through-hole H_th having the slit shape may be preferred.

In one example, the through-hole H_th having the same horizontal cross-sectional area size as that of the concave groove G_th is formed in the first coil circuit board module 251, such that the through-hole H_th may function as a ventilation hole as the through-hole H_O of the second embodiment described above does.

Accordingly, the effect of preventing overheating of the first coil circuit board module 251 due to heat generation of the working coil pattern 2512 and the effect of preventing overheating of the temperature sensor 2515 itself may be achieved due to the through-hole H_th functioning as the ventilation hole more effectively than due to the above-described through-hole H_O.

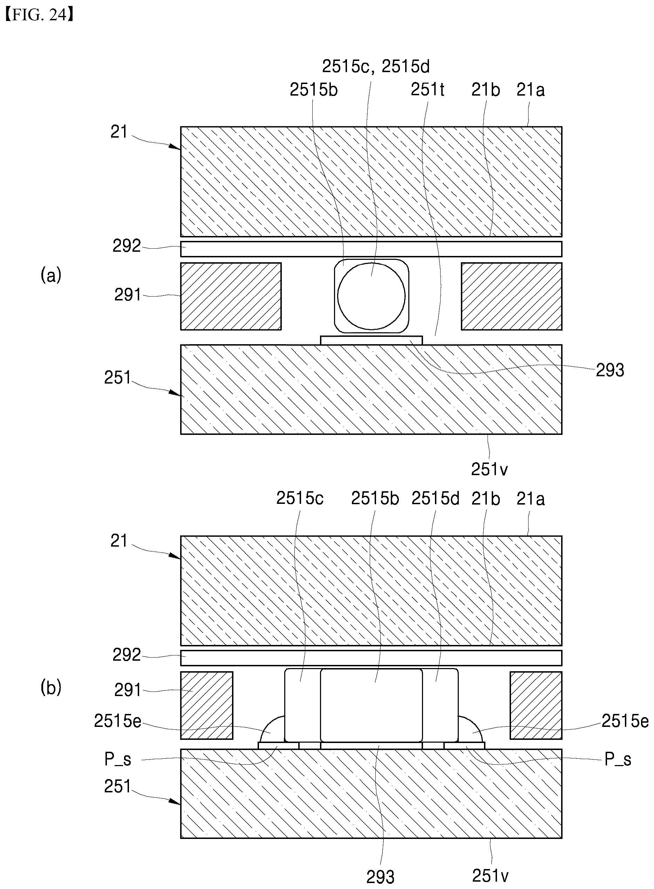

In one example, (a) and (b) in FIG. 24 illustrate a configuration in which the sensor body 2515b of the temperature sensor 2515 is isolated from the first coil circuit board module 251 by an additional thermal insulator 293 disposed on the upper end surface of the first coil circuit board module 251 according to a fourth embodiment of the present disclosure.

Referring to (a) and (b) in FIG. 24, the fourth embodiment of the present disclosure may further include the additional thermal insulator 293 disposed between the sensor body 2515b of the temperature sensor 2515 and the upper end surface 251t of the first coil circuit board module 251.

The additional thermal insulator 293 may be made of the same material as that of the above-described thermal insulator 291 or may be made of a different material from that of the above-described thermal insulator 291.

However, the main purpose of the additional thermal insulator 293 is to isolate the sensor body 2515b of the temperature sensor 2515 from the upper end surface 251t of the first coil circuit board module 251. Thus, as illustrated, the additional thermal insulator 293 may be provided in a form of a thermal insulating sheet having a thickness in the vertical direction which is much smaller than the thickness of the thermal insulator 291 in the vertical direction.

In addition, for the same reason, an area size of the additional electrical insulating material 293 does not need to be larger than an area size of the lower surface of the sensor body 2515b, and may be approximately equal to as or slightly smaller than the area size of the lower surface of the sensor body 2515b.

In addition, the additional thermal insulator 293 may be disposed in such a way that it is pre-attached to the lower surface of the sensor body 2515b or is pre-attached to the upper end surface 251t of the first coil circuit board module 251.

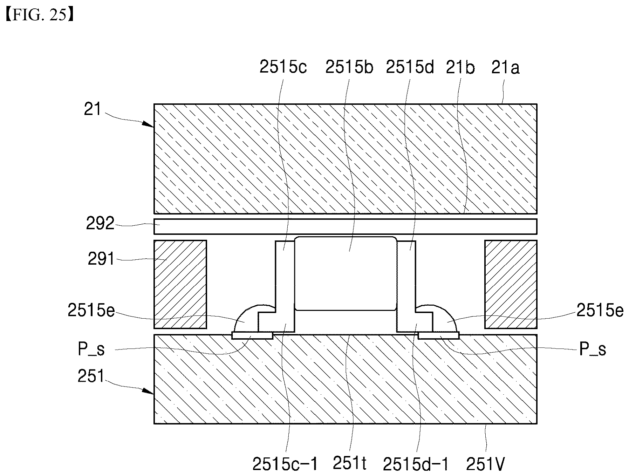

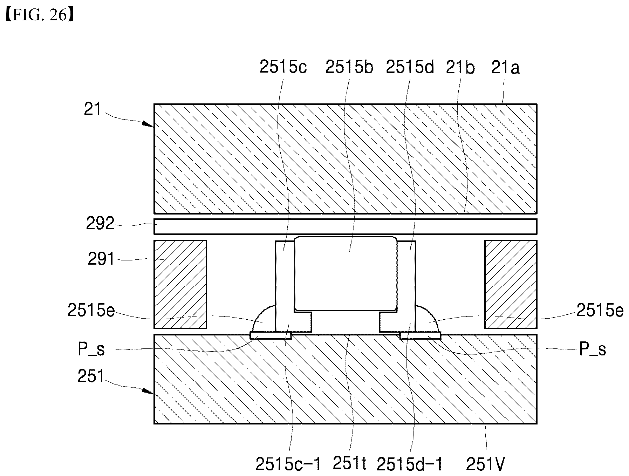

In one example, FIGS. 25 and 26 illustrate a configuration in which the sensor body 2515b of the temperature sensor 2515 is isolated from the first coil circuit board module 251 by the protrusions 2515c-1 and 2515d-1 provided in the first electrode 2515c and the second electrode 2515d, respectively, according to a fifth embodiment of the present disclosure.

Referring to FIGS. 25 and 26, the first electrode 2515c and the second electrode 2515d of the temperature sensor 2515 according to the fifth embodiment of the present disclosure may further respectively include the protrusions 2515c-1 and 2515d-1 arranged in parallel with the upper end surface 251t of the first coil circuit board module 251.

By way of example, the protrusions 2515c-1 and 2515d-1 of the first electrode 2515c and the second electrode 2515d may be respectively formed to protrude from the first electrode 2515c and the second electrode 2515d such that each of the protrusions 2515c-1 and 2515d-1 extends along a direction parallel to the upper end surface 251t of the first coil circuit board module 251.

For example, when each of the first electrode 2515c and the second electrode 2515d has a disk or cylindrical shape as described above, each of the protrusions 2515c-1 and 2515d-1 may have one end integrally coupled to the outer circumferential surface of each of the first electrode 2515c and the outer circumferential surface of the second electrode 2515d and thus acting as a fixed end, and the other end extending in a direction away from each of the first electrode 2515a and the second electrode 2515d and thus acting as a free end.

In this regard, as illustrated, the protrusion 2515c of the first electrode 2515c-1 and the protrusion 2515d of the second electrode 2515d-1 function as connection portions contacting and connected to the pair of sensor pads P_s via soldering, respectively.

Accordingly, when each of the protrusion 2515c-1 of the first electrode 2515c and the protrusion 2515d-1 of the second electrode 2515d is soldered to each of the sensor pads P_s, an isolation spacing having a height corresponding to at least each of a thickness of the protrusion 2515c-1 of the first electrode 2515c in the vertical direction and the thickness of the protrusion 2515d-1 of the second electrode 2515d in the vertical direction may be defined between the lower surface of the sensor body 2515b and the upper end surface of the first coil circuit board module 251.

That is, the isolation spacing having the height greater than or equal to the vertical thickness of each of the protrusions 2515c-1 and 2515d-1 may be defined between the lower surface of the sensor body 2515b and the upper end surface of the first coil circuit board module 251.

Due to the isolation spacing, the sensor body 2515b of the temperature sensor 2515 may be entirely isolated from the upper end surface 251t of the first coil circuit board module 251.

Each of the protrusion 2515c-1 of the first electrode 2515c and the protrusion 2515d-1 of the second electrode 2515d may be formed to extend along a direction away from the sensor body 2515b as shown in FIG. 25, or may be formed to extend along a direction toward the sensor body 2515b as shown in FIG. 26.

When each of the protrusion 2515c-1 of the first electrode 2515c and the protrusion 2515d-1 of the second electrode 2515d extends along the direction toward the sensor body 2515b, each of the protrusion 2515c of the first electrode 2515c-1 and the protrusion 2515d of the second electrode 2515d-1 may be disposed between the upper end surface 251t of the first coil circuit board module 251 and the lower surface of the sensor body 2515b.

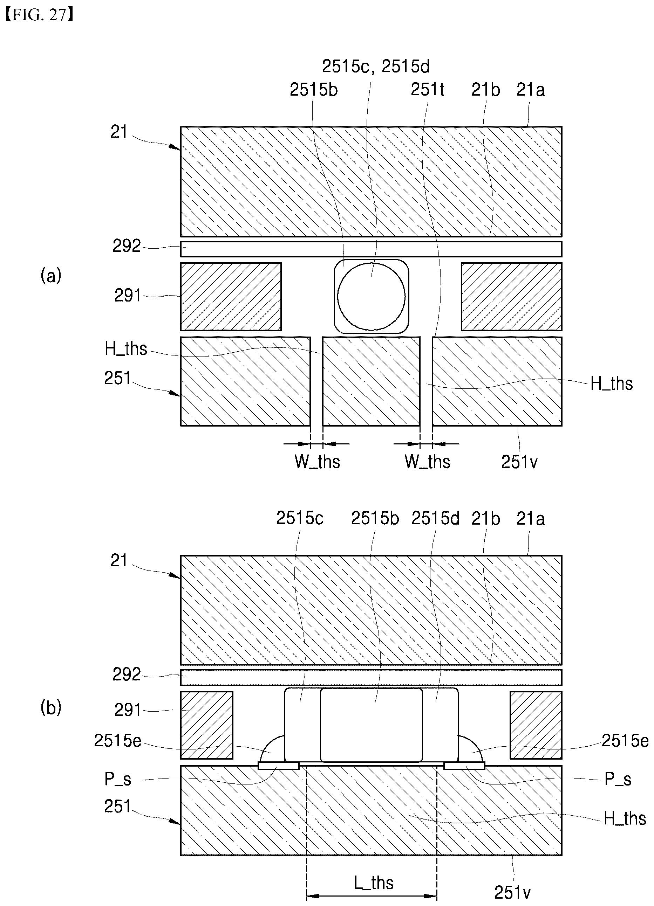

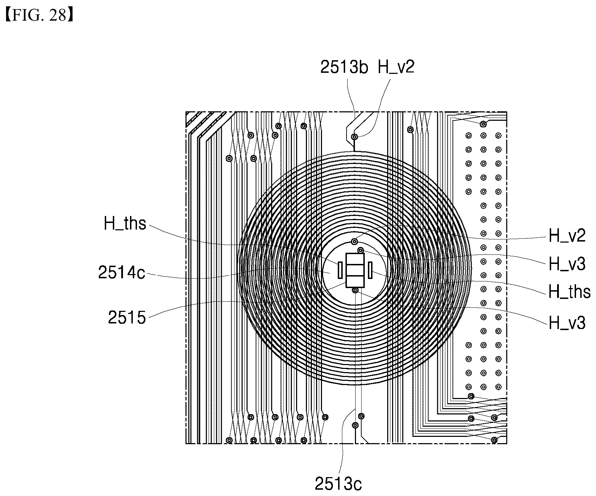

In one example, FIGS. 27 and 28 illustrate a configuration in which the first coil circuit board module 251 has a through-slit H_ths according to a sixth embodiment of the present disclosure.

In the above-described embodiments, the sensor body 2515b of the temperature sensor 2515 is isolated from the first coil circuit board module 251 in order to solve the phenomenon that the temperature sensed by the temperature sensor 2515 follows the temperature of the first coil circuit board module 251.

As illustrated in FIGS. 27 and 28, in the sixth embodiment of the present disclosure, the first coil circuit board module 251 may include the through-slit H_ths defined therein as a means for minimizing the phenomenon that the temperature sensed by the temperature sensor 2515 follows the temperature of the first coil circuit board module 251 in a state in which the sensor body 2515a of the temperature sensor 2515 is in contact with the upper end surface 251t of the first coil circuit board module 251.

More specifically, referring to FIGS. 27 and 28, the first coil circuit board module 251 according to the sixth embodiment of the present disclosure may have the through-slit H_ths defined therein at a position not overlapping the temperature sensor 2515 in the vertical direction and extending through the upper end surface 251t to the lower end surface 251v of the first coil circuit board module 251.

FIGS. 27 and 28 illustrate a configuration in which the through-slit H_ths is defined in the first coil circuit board module 251 in a state in which the sensor body 2515b of the temperature sensor 2515 is in contact with the upper end surface 251t of the first coil circuit board module 251. However, unlike this configuration, the through-slit H_ths may be additionally defined in the first coil circuit board module 251 in a state in which the concave groove G_th and the through-hole H_th described above are defined in the first coil circuit board module 251. However, hereinafter, as illustrated, an embodiment in which the through-slit H_ths is defined in the first coil circuit board module 251 in a state in which the sensor body 2515b is in contact with the first coil circuit board module 251 will be described by way of example. However, the present disclosure is not limited thereto.

The through-slit H_ths functions as a blocking wall or a barrier that minimizes the conduction of the heat generated from the working coil pattern 2512 to the sensor body 2515b via the first coil circuit board module 251.

In order to minimize an amount by which the heat generated from the working coil pattern 2512 is conducted to the sensor body 2515b, a pair of through-slits H_ths may be provided. The pair of through-slits H_ths may be defined in the first coil circuit board module 251 while being spaced apart from each other such that the sensor body 2515b is interposed therebetween in a plan view. That is, the sensor body 2515b may be in a state of being sandwiched between the pair of through-slits H_ths in the plan view.

The pair of through-slits H_ths may be positioned adjacent to the temperature sensor 2515 and so as to overlap the central inner area 2514c of the sensing coil pattern 2514 while the temperature sensor 2515 is disposed in the central inner area 2514c.

In this regard, as illustrated, the pair of through-slits H_ths may be positioned at positions that do not overlap the temperature sensor 2515 in the vertical direction. That is, the pair of through-slits H_ths may be positioned so as to overlap the central inner area 2514c of the sensing coil pattern 2514 and to non-overlap the sensor body 2515b, the first electrode 2515c, and the second electrode 2515d constituting the temperature sensor 2515 in the vertical direction.

In addition, each of the pair of through-slits H_ths may extend such that a direction parallel to the longitudinal direction of the sensor body 2515b becomes the longitudinal direction of each of the pair of through-slits H_ths.

As described above, each of the pair of through-slits H_ths is disposed so as not to overlap the temperature sensor 2515 in the vertical direction and extends so that the direction parallel to the longitudinal direction of the sensor body 2515b is the longitudinal direction as the extending direction of each of the pair of through-slits H_ths. Thus, a horizontal gap may be defined between each of the pair of through-slits H_ths and the sensor body 2515b.

In one example, as illustrated, the through-slit H_ths is positioned so as to non-overlap each of the first electrode 2515a and the second electrode 2515d. This is because when the through-slit H_ths is disposed at a position so as to overlap each of the first electrode 2515c and the second electrode 2515d as illustrated in FIG. 28, an area in which the second lead pattern 2513b or the third lead pattern 2513c as described above extends may not be secured.

As illustrated in FIG. 27, the pair of through-slits H_ths may be formed to have substantially the same shape and size.

More specifically, the pair of through-slits H_ths may be formed in a slit hole shape in which a longitudinal width L_ths is much larger than a transverse width W_ths.

However, it is necessary to limit the size of the pair of through-slits H_ths so that the pair of through-slits H_ths are effectively disposed in an area overlapping the central inner area 2514c of the sensing coil pattern 2514 and do not interfere with the sensing coil pattern 2514, the second lead pattern 2513b, and the third lead pattern 2513c.

To this end, as illustrated, the transverse width W_ths of each of the pair of through-slits H_ths may be limited to have a smaller size than the transverse width Ws_t of the sensor body 2515a, and the longitudinal width L_ths of each of the pair of through-slits H_ths may be limited to have a smaller size than the longitudinal width of the temperature sensor 2515.

However, as shown in (b) in FIG. 27, the longitudinal width L_ths of each of the pair of through-slits H_ths may be set to be greater than the longitudinal width Ws_1 of the sensor body 2515b so that the effect of preventing the heat from being conducted to the sensor body 2515b may be prevented from being deteriorated.

Although the present disclosure has been described above with reference to the drawings illustrated with respect to the present disclosure, the present disclosure is not limited to the embodiments and drawings disclosed in the present disclosure. It is obvious that various modifications may be made thereto by a person skilled in the art within the scope of the technical idea of the present disclosure. In addition, even though the effects according to the configuration of the present disclosure are not explicitly described while illustrating the embodiment of the present disclosure, it is obvious that the predictable effect therefrom should also be recognized.

## Claims

1. A cooking appliance comprising:
a top plate on which a container is seated;
a temperature sensor configured to sense a temperature of the top plate; and
a coil circuit board module including:
a working coil pattern spirally wound to generate a magnetic field; and
a sensing coil pattern spirally wound to sense whether the container is seated on the top plate,
wherein the temperature sensor is disposed in the coil circuit board module in a state in which the temperature sensor is surrounded with the sensing coil pattern when being viewed from the top plate.

2. The cooking appliance of claim 1, wherein the temperature sensor is positioned so as to non-overlap the sensing coil pattern and the working coil pattern.

3. The cooking appliance of claim 1, wherein the sensing coil pattern has a central inner area in which no pattern is formed,
wherein the temperature sensor is positioned in the central inner area.

4. The cooking appliance of claim 1, wherein the temperature sensor includes:
a sensing chip outputting an output signal related to a sensed temperature;
a sensor body accommodating the sensing chip therein; and
a first electrode and a second electrode arranged so as to be spaced apart from each other while the sensor body is interposed therebetween, wherein the first electrode and the second electrode are electrically connected to the sensing chip,
wherein the coil circuit board module has a rectangular plate shape,
wherein a direction in which the first electrode and the second electrode are arranged so as to be spaced apart from each other is parallel to or intersect an extension direction of an outer edge of the coil circuit board module.

5. The cooking appliance of claim 1, wherein the coil circuit board module includes a pair of sensor pads electrically connected to the first electrode and the second electrode, respectively, wherein the pair of sensor pads are arranged to be spaced apart from each other while the sensor body is interposed therebetween,
wherein a direction in which the pair of sensor pads are arranged so as to be spaced apart from each other is parallel to or intersect an extending direction of an outer edge of the coil circuit board module.

6. The cooking appliance of claim 1, wherein the temperature sensor includes:
a sensing chip outputting an output signal related to a sensed temperature;
a sensor body accommodating the sensing chip therein; and
a first electrode and a second electrode arranged so as to be spaced apart from each other while the sensor body is interposed therebetween, wherein the first electrode and the second electrode are electrically connected to the sensing chip,
wherein the temperature sensor is mounted on the coil circuit board module in a state in which the sensor body is isolated from the coil circuit board module.

7. The cooking appliance of claim 1, wherein a concave groove is defined in an upper surface of the coil circuit board module and is disposed under the sensor body and is depressed in a direction away from the sensor body,
wherein the concave groove at least partially isolates the sensor body from the coil circuit board module.

8. The cooking appliance of claim 1, wherein a longitudinal width of the sensor body is smaller than a longitudinal width of the concave groove,
wherein a transverse width of the sensor body is smaller than a transverse width of the concave groove.

9. The cooking appliance of claim 7, wherein a depth in a vertical direction of the concave groove is smaller than or equal to half of a thickness in the vertical direction of the coil circuit board module.

10. The cooking appliance of claim 7, wherein the coil circuit board module includes a pair of sensor pads electrically connected to the first electrode and the second electrode, respectively, wherein the pair of sensor pads are arranged so as to be spaced apart from each other while the sensor body is interposed therebetween,
wherein the pair of sensor pads is disposed in the coil circuit board module such that a predetermined longitudinal spacing is defined between the concave groove and each of the pair of sensor pads.

11. The cooking appliance of claim 7, wherein the coil circuit board module further includes a through-hole extending from a lower end surface of the concave groove through the coil circuit board module to a lower end surface of the coil circuit board module,
wherein a horizontal cross-sectional area size of the through-hole is smaller than a horizontal cross-sectional area size of the concave groove.

12. The cooking appliance of claim 6, wherein the coil circuit board module has a through-hole disposed under the sensor body and extending through an upper surface to a lower surface of the coil circuit board module,
wherein the through-hole entirely isolates the sensor body from the coil circuit board module.

13. The cooking appliance of claim 12, wherein a longitudinal width of the sensor body is smaller than a longitudinal width of the through-hole,
wherein a transverse width of the sensor body is smaller than a transverse width of the through-hole.

14. The cooking appliance of claim 6, wherein a thermal insulating material is disposed in an upper end surface of the coil circuit board module and entirely isolates the sensor body from the upper end surface of the coil circuit board module.

15. The cooking appliance of claim 6, wherein the first electrode and the second electrode have respective protrusions arranged in a parallel manner with an upper end surface of the coil circuit board module,
wherein when the temperature sensor is mounted on the upper end surface of the coil circuit board module, the sensor body is isolated from the upper end surface of the coil circuit board module by the protrusion.

16. The cooking appliance of claim 15, wherein an isolation spacing is defined between the sensor body and the upper end surface of the coil circuit board module,
wherein a vertical height of the isolation spacing is greater than or equal to a vertical thickness of the protrusion.

17. The cooking appliance of claim 15, wherein each of the protrusion of the first electrode and the protrusion of the second electrode extends in a direction away from the sensor body.

18. The cooking appliance of claim 15, wherein each of the protrusion of the first electrode and the protrusion of the second electrode extends in a direction toward the sensor body.

19. The cooking appliance of claim 1, wherein the temperature sensor includes:
a sensing chip outputting an output signal related to a sensed temperature;
a sensor body accommodating the sensing chip therein; and
a first electrode and a second electrode arranged so as to be spaced apart from each other while the sensor body is interposed therebetween, wherein the first electrode and the second electrode are electrically connected to the sensing chip,
wherein the coil circuit board module has a through-slit defined therein at a position not overlapping the sensor body, the first electrode, and the second electrode in a vertical direction, wherein the through-slit extends through an upper end surface to a lower end surface of the coil circuit board module.

20. The cooking appliance of claim 19, wherein the through-slit includes a pair of the through-slits,
wherein the pair of through-slits are disposed in the coil circuit board module so as to be spaced apart from each other while the sensor body is interposed therebetween.
